# EUROPEAN PATENT SPECIFICATION

(11) **EP 3 568 527 B1**
(45) Date of publication and mention of the grant of the patent: **02.07.2025**
(21) Application number: 18738658.6
(22) Date of filing: 10.01.2018
(51) Int. Cl.: E02D 27/42, B29C 64/00, E04H 12/22

(54) **AN ASSEMBLY COMPRSING A POLE FOUNDATION FORMED BY 3D PRINTING**
EIN ZUSAMMENBAU BEINHALTEND EIN STÜTZENFUNDAMENT GEFERTIGT MITTELS 3D DRUCK
UN ASSEMBLAGE COMPRENANT UNE FONDATION DE POTEAU FABRIQUÉE PAR 3D IMPRESSION

(30) Priority: 11.01.2017 US 201715404051; 01.02.2017 US 201762453353 P; 27.11.2017 US 201762590817 P; 27.11.2017 US 201762590837 P; 27.11.2017 US 201762590831 P
(43) Date of publication of application: 20.11.2019
(73) Proprietor: Spiro, Daniel S., Scottsdale, Arizona 85251 (US)
(72) Inventor: Spiro, Daniel S., Scottsdale, Arizona 85251 (US)
(74) Representative: AWA Sweden AB
(86) International application number: PCT/US2018/013148
(87) International publication number: WO 2018/132463

(56) References cited:
- WO-A1-2007/064235
- CN-U- 204 052 899
- DE-A1- 4 414 515
- JP-A- 2005 240 426
- US-A- 2 784 015
- US-A1- 2005 051 695
- US-A1- 2007 022 706
- US-A1- 2013 212 966
- US-B1- 8 782 978
- US-B1- 9 777 456
- US-B2- 7 954 289

## Description

### BACKGROUND OF THE INVENTION

### Technical Field

This invention relates generally to an assembly according to claim 1 and more particularly to a an assembly comprising a pre-fabricated pole foundation and method according to claim 13 for installation to reduce pole assembly and erection time.

### State of the Art

Conventional pole erection having a base plate requires lowering a pole onto a foundation with embedded threaded anchor bolts. The threaded anchor bolts pass through the pole's base plate. The pole is then secured to the foundation and then plumbed. The entire process of erecting a conventional pole and foundation is lengthy, requiring coordination between material suppliers and construction trades. The construction process is time sensitive. Coordinating multiple parties comes with risks of delay. These delay risks are compounded when having to work in outdoor conditions subject to unpredictable weather. Other drawbacks to the conventional pole erection method include: use of pole base plate adds cost to the pole and is foundation-specific, governed by anchor bolt bore spacing, having to refinish the above grade portion of the foundation following pole erection, corrosion exposure requiring periodic inspections and occasional maintenance work.

US 8 782 978 discloses a post footing device that facilitates replacement of broken posts. WO2007/064235 discloses an anchoring system to lock posts into housings mounted in the ground. DE 44 14515A1 refers to a method of anchoring a post in the ground. US 2 784 015 discloses a pole base which allows retaining of poles of different sizes in position. JP 2005240426 discloses an erection structure which facilitates injection of a filler where the filler can properly spread and ensure erection strength of a steel-pipe column. 3d printing even for large objects is disclosed in CN204052889U.

The process of erection of a conventional pole with base plate typically entails the following steps:
1. Ordering materials such as steel, rebar, gravel, plywood and forms;
2. Scheduling on-site drop ship date for the above materials;
3. Ordering luminaires and poles, often requiring that anchor bolts pre-ship prior to balance of orders;
4. Building the steel cage for the foundation's structural reinforcement;
5. Employing wood template secure anchor bolts to steel cage;
6. Scheduling a date for concrete pour;
7. Auguring foundation bores and, where needed, providing bedding material for the foundation (weather permitting);
8. Dropping forms with rebar cage into bore plumb and securing them or dropping the steel rebar cage into the form after the form was plumbed and secured in bore. The steel rebar cage could be inserted inside the form or following;
9. Making all pre-pour electrical connectivity prep work;
10. Back filling and compacting soil around the form if needed;
11. Scheduling a crane;
12. Pouring concrete, vibrating inside form, and waiting until concrete cures;
13. Assembling pole and luminaire/s and/or other devices;
14. Using a crane to lower pole assembly on pole bases and securing pole to foundation with anchor bolt nuts;
15. Adjusting anchor bolt nuts to plumb the pole;
16. Removing above grade forms and refinishing the foundation's surfaces;
17. Pulling all electrical wiring and securing the hand hole cover to pole;
18. Placing pole base cover or architectural nut covers on anchor bolts;
19. Refinishing/touching up any scratches and removing dirt from pole and pole base; and
20. Powering up pole mounted devices and verifying proper operations.
The construction industry has a persistent need for an economical and rapid installation solution for erecting poles eliminating the drawbacks of the conventional means and methods.

### SUMMARY OF THE INVENTION

The present invention relates to an assembly according to claim 1 comprising a pre-fabricated pole foundation and method according to claim 13 for installation to reduce pole assembly and erection time. More precisely, according to claim 1, an assembly comprising a pre-fabricated pole foundation to be used for a pole without a base plate is provided, characterized in that the pre-fabricated pole foundation employs polymer molten resin employed by 3D printing. Further, according to claim 13, a method of erecting a pole is provided.

An embodiment, not forming part of the invention, includes a pre-fabricated pole foundation comprising: a cavity section having a pole cavity and a cavity wall having recesses; a core section having core walls; and a base section, wherein: the cavity section includes a tapered structure located on a bottom end of the pole cavity within the within the cavity wall; the tapered structure is configured to support a pole and operates as a pivot point to plumb the pole using alignment devices; and the tapered structure accommodates poles of dissimilar cross-sectional profiles, dimensions and material interchangeably; and cavity walls inner surfaces contain recesses that support pole aligning devices and may have through bores to facilitate anchoring the pole to the foundation.

Another embodiment, not forming part of the invention, includes a pre-fabricated pole foundation comprising: a cavity section having a pole cavity and a cavity wall having recesses; a bridge section located directly below the cavity section, the bridge section comprising an integral tapered structure supporting the pole or a keyed surface onto which a removable keyed tapered structure is coupled; a core section located having core walls, the core section located directly below the bridge section; and a base section located directly below the core section, wherein: tapered structure is configured to support a pole and operates as a pivot point to plumb the pole using alignment devices; and tapered structure accommodates poles of dissimilar cross-sectional profiles, dimensions and material interchangeably; and cavity walls inner surfaces contain recesses that support pole plumbing devices and may have through bores to facilitate anchoring the pole to the foundation; the tapered structure in one embodiment is capable of horizontal rotation for clocking the pole assembly.

Further, another embodiment, not forming part of the invention, includes a method of installing a pre-fabricated pole foundation and a pole assembly, the method comprising: forming bore within a portion of ground soil; hoisting and lowering a pre-fabricated pole foundation within the bore, wherein the pre-fabricated pole foundation comprises: a cavity section having a pole cavity, an cavity wall and a tapered structure located on a bottom end of the pole cavity within the within the cavity wall; a core section having core walls; and a base section; hoisting and lowering a pole assembly within the pole cavity of the cavity section of the pre-fabricated pole foundation; supporting the pole assembly on the tapered structure; pivoting the pole assembly on the tapered structure in response to operation of alignment devices to plumb the pole assembly; and filling open spaces between core walls and the pole cavity with granular or similar structural propertied material and anchoring the pole to the foundation if required and capping the top of pole cavity with grout or similar material as well as lead bores if exist at the exterior walls of pole cavity opening.

Yet another embodiment, not forming part of the invention, includes a pre-fabricated pole foundation comprising: an upper portion having a pole cavity for receiving and retaining a pole and a cavity wall; and a lower portion located below the upper portion, wherein the upper portion includes a tapered structure located at the bottom end of the pole cavity within the cavity wall, wherein the tapered structure is configured to support the pole and operate as a pivot point to plumb the pole using alignment devices wherein the tapered structure accommodates poles of dissimilar cross-sectional profiles, dimensions, and material interchangeably; wherein the tapered structure may be detachable and keyed; and a plurality of recesses in the inside of the pole cavity walls provide anchoring location to at least pole hoisting devices, pole plumb devices and pole anchoring devices, wherein the pole cavity is configured to receive fill material through the pole cavity top end and fill voids between the cavity wall and the pole exterior surface to provide lateral support to embedded pole.

The foregoing and other features and advantages of the present invention will be apparent from the following more detailed description of the particular embodiments of the invention, as illustrated in the accompanying drawings.

### BRIEF DESCRIPTION OF THE DRAWINGS

A more complete understanding of the present invention may be derived by referring to the detailed description and claims when considered in connection with the Figures, wherein like reference numbers refer to similar items throughout the Figures, and:
FIG. 1A is a side view of a pole foundation in accordance with an embodiment;
FIG. 1B is a top view of a pole foundation in accordance with an embodiment;
FIG. 1C is a section view of a pole foundation in accordance with an embodiment;
FIG. 2A is a side view of a pole foundation in accordance with an embodiment;
FIG. 2B is a top perspective view of a pole foundation in accordance with an embodiment;
FIG. 2C is a bottom perspective view of a pole foundation in accordance with an embodiment;
FIG. 3A is a side view of an auger forming a bore in soil in accordance with an embodiment;
FIG. 3B is a side view of bedding material added within the bore as needed in accordance with an embodiment;
FIG. 3C is a side view of a pole foundation lowered into the bore in accordance with an embodiment;
FIG. 3D is a side view of a pole foundation secured within a bore in accordance with an embodiment;
FIG. 4A is a top view of a pole placed within a pole foundation in accordance with an embodiment;
FIG. 4B is a side section view of a pole placed within a pole foundation in accordance with an embodiment;
FIG. 4C is a top view of a pole placed and secured within a pole foundation in accordance with an embodiment;
FIG. 4D is a side section view of a pole placed and secured within a pole foundation in accordance with an embodiment;
FIG. 4E is a top view of a pole placed and secured within a pole foundation in accordance with an embodiment;
FIG. 4F is a side section view of a pole placed and secured within a pole foundation in accordance with an embodiment;
FIG. 4G is a top view of a pole placed within a pole foundation and a pole drill drilling into the pole in accordance with an embodiment;
FIG. 4H is a side section view of a pole placed within a pole foundation and a pole drill drilling into the pole in accordance with an embodiment;
FIG. 4I is a top view of a pole placed and secured within a pole foundation with anti-rotation/uplift bolts in accordance with an embodiment;
FIG. 4J is a side section view of a pole placed and secured within a pole foundation with anti-rotation/uplift bolts in accordance with an embodiment;
FIG. 4K is a top view of a pole placed and secured within a pole foundation with a cap installed in accordance with an embodiment;
FIG. 4L is a side section view of a pole placed and secured within a pole foundation with a cap installed in accordance with an embodiment;
FIG. 5A is a partial section view of a top portion of a pole foundation for use with a square pole in accordance with an embodiment;
FIG. 5B is a top view of a top portion of a pole foundation for use with a square pole in accordance with an embodiment;
FIG. 5C is a top view of a top portion of a pole foundation for use with a round pole in accordance with an embodiment;
FIG. 5D is a partial section view of a top portion of a pole foundation for use with a round pole in accordance with an embodiment;
FIG. 6A is a partial section view of a pole foundation in accordance with an embodiment;
FIG. 6B is a perspective view of a round pole insert in accordance with an embodiment;
FIG. 6C is a perspective view of a square pole insert in accordance with an embodiment;
FIG. 6D is a bottom view of a square pole insert in accordance with an embodiment;
FIG. 6E is a top view of square pole insert in accordance with an embodiment;
FIG. 6F is a side view of a square pole insert in accordance with an embodiment;

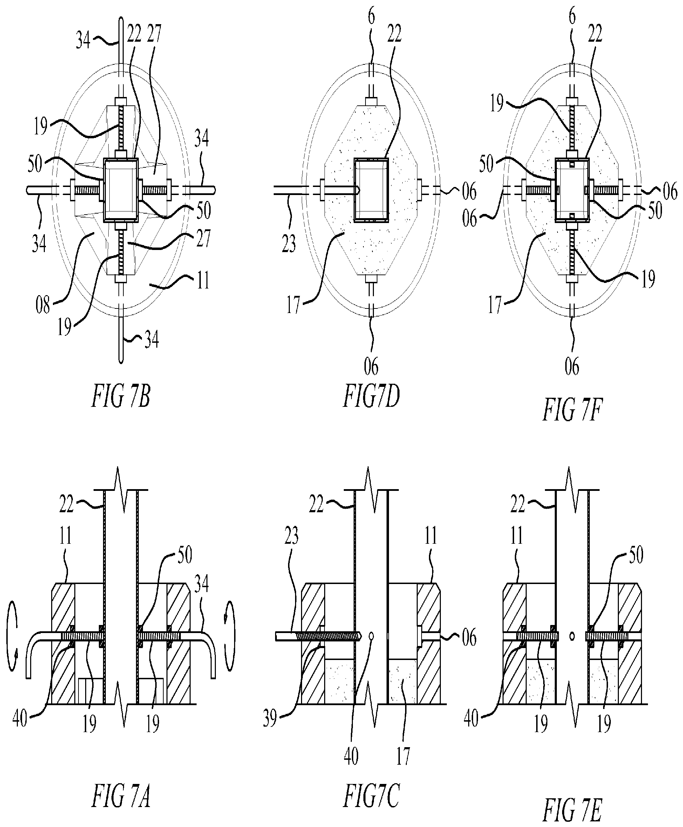

FIG. 7A is a side section view of a top portion of a pole foundation with pole plumbing in accordance with an embodiment;
FIG. 7B is a top view of a top portion of a pole foundation with pole plumbing in accordance with an embodiment;
FIG. 7C is a side section view of a top portion of a pole foundation showing drilling for anchoring in accordance with an embodiment;
FIG. 7D is a top view of a top portion of a pole foundation showing drilling for anchoring in accordance with an embodiment;
FIG. 7E is a side section view of a top portion of a pole foundation with anchoring in accordance with an embodiment;
FIG. 7F is a top view of a top portion of a pole foundation with anchoring in accordance with an embodiment;
FIG. 8A is a partial section perspective view of a pole foundation with power and/or data connectivity components in accordance with an embodiment;
FIG. 8B is a perspective view of a pole foundation with power and/or data connectivity components in accordance with an embodiment;
FIG. 8C is a section view of a pole foundation with power and/or data connectivity components in accordance with an embodiment;
FIG. 9A is a partial section perspective view of an installation device for use with a pole foundation in accordance with an embodiment;
FIG. 9B is a section view of an installation device for use with a pole foundation in accordance with an embodiment;
FIG. 9C is a top view of an installation device for use with a pole foundation in accordance with an embodiment; and
FIG. 9D is a perspective view of an installation device for use with a pole foundation in accordance with an embodiment.
FIG. 10A is an elevation view of a removable pole alignment device.
FIG. 10B is a section view of the removable alignment device engaged inside a pole cavity in accordance with an embodiment.
FIG. 10C is a plan view of the removable alignment device engaged in pole cavity in accordance with an embodiment.
Figs. 11 A-D show the foundation erection process.
Figs. 12 A-D show the foundation erection process for pole foundation embodiment of cruciform cross section employing volumetric cells.
Figs. 13 A-D show the foundation erection process for pole foundation embodiment of round cross section employing volumetric cells.
Figs. 14A-F show pole elevation and sections of the pole foundation embodiment employing volumetric and/or cellular cells.
Figs. 15A, 15A-A, 15B-B and 15C show horizontal sections of pole foundation embodiment employing volumetric and/or cellular structure.
Figs. 16A-16B and 16C-16D show two pole assemblies top and side views.
Figs. 16E and 16F show enlargements of two embodiments.
Figs. 17A-17B and Figs. 17C and 17D show top and bottom perspective views of the I-Cap embodiment types with side entry bolts.
Fig 17E-E and Fig 17F-F enlarged longitudinal and transverse sections of the I-cap.
Fig 18A is a section showing the I-cap inside the pole cavity with a through bolt engaging the pole.
Fig 18B shows the same assembly in plan view.
Fig 18C shows an enlarged section of the I-Cap at the top of the foundation.
Figs. 19A-19F show in top and side view different pole and foundation profile embodiments using the side entry lock bolts I-cap.
Figs. 20A-20B and 20C-20D show two pole assemblies top and side views.
Figs. 20E and 20F show enlargements of two embodiments.
Figs. 21A-21B and Figs. 21C-21D show top and bottom perspective views of the I-Cap embodiment types with top and side entry bolts.
Fig 21E-E and Fig 21F-F enlarged longitudinal and transverse sections of the I-cap.
Fig 22A is a section showing the I-cap inside the pole cavity with a through bolt engaging the pole.
Fig 22B shows the same assembly of Fig. 22A in plan view.
Fig 22C shows an enlarged section of the I-Cap at the top of the foundation employing a bolt to secure the I-Cap to the foundation.
Figs. 23A-23F show in top and side view different pole foundation profile embodiments using the top entry lock bolt I-cap.
Figs. 24A-24B show elevation views and 24A-A - 24D-D show sections of two foundations core profiles retaining the embedded pole.
Figs. 25A-25D show the foundation and pole embedment process.
Fig. 26A show a diagram of the foundation elevation with section designators.
Figs. 26A-A and 26B-B show partial sections of a foundation embodiment's pole cavity and core sections.

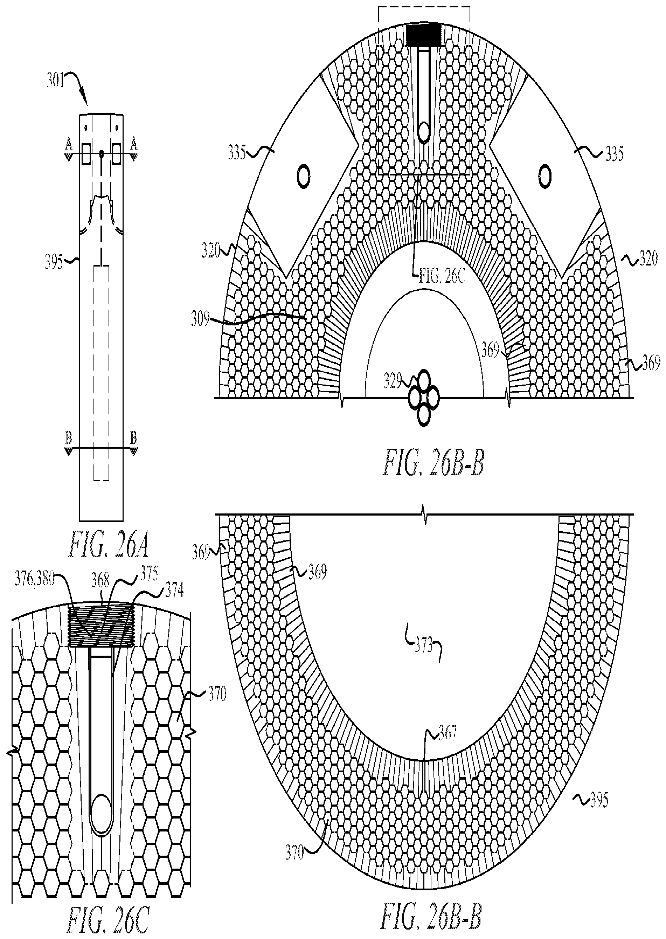

Fig. 26C shows an enlargement of the pole cavity wall.

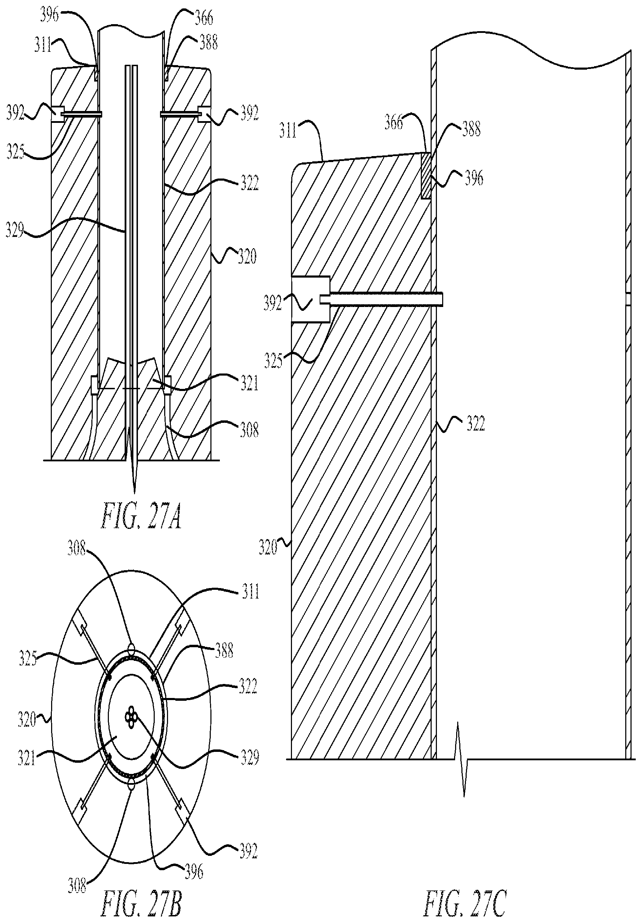

Figs. 27A show a straight wall pole embedded in a foundation pole cavity.
Fig 27B shows a plan view of the above section.
Fig 27C shows an enlarged section of the pole cavity wall retaining a pole.

### DETAILED DESCRIPTION OF EMBODIMENTS OF THE INVENTION

As discussed above, embodiments of the present invention relate to pre-fabricated pole foundation and method for installation to reduce pole assembly and erection time.

To mitigate drawbacks associated with the process of conventional pole erection, the present invention includes and employs two pre-fabricated elements, namely a foundation and pole free of base plate notwithstanding the specified device/s assembly on the pole.

Eliminating the pole base plate from the pole, along with its anchor bolts, provides the ability for the foundation to accept a variety of pole cross-sectional profiles, dimensions and materials. In general use, the pre-fabricated foundation arrives on site ready to be lowered into an excavated bore absent of any structural or architectural imperfections. The pre-fabricated foundation construction fabrication is consistent across wide geographical areas, eliminating dependency on local contractor skill level. The two assembly elements, the pre-fabricated pole foundation and the pole joined together operates to remove several steps from the process of erecting a conventional pole. The steps removed include:
1. Ordering material such as steel rebar, gravel, plywood and forms. Aside from foundation, the only material needed is granular fill or similar material in structural property;
2. Ordering anchor bolts and making pre-ship arrangements;
3. Building a steel rebar cage;
4. Building anchor bolt templates and securing them to cage;
5. Scheduling a concrete pole;
6. Dropping forms into augured bores;
7. Pouring concrete and waiting for the concrete to cure;
8. Securing pole to foundation and plumbing using anchor bolt;
9. Removing form from above grade;
10. Refinishing pole foundation above grade; and
11. Concealing anchor bolts using bolt covers or base plate cover.

In addition, post-construction steps removed include:
1. Periodical corrosion inspection; and
2. Periodical maintenance work.

In addition, pre-fabricated opening/s with or without conduit/s embedded in the pre-fabricated foundation enable the pre-fabricated pole foundation to ground electrical devices as well as to retain related and non-related pole assembly devices. Such devices may include input sensory devices such as accelerometer, noise, pollution, camera and/or input/output or output devices such as a transceiver, surge protector and receptacle for a vehicle charger or a receptacle for a temporary holiday lighting display. Both foundation and pole can easily be removed intact, and be re-used should the need arise. The streamlining of the pole erection process, employing the present innovation, reduces production time from weeks to only a matter of hours and days

### Foundation Structural Design

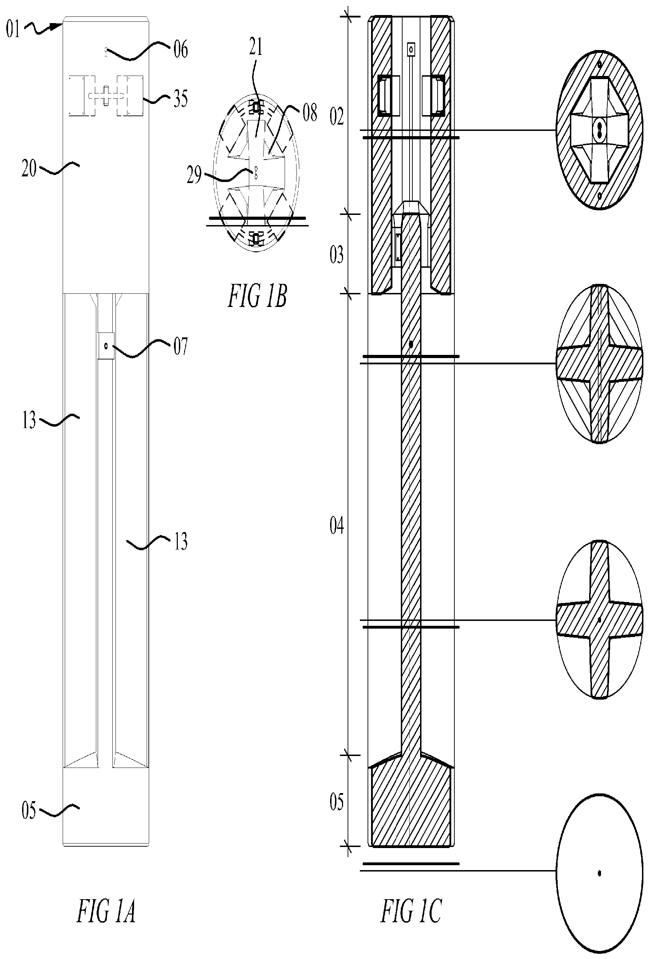

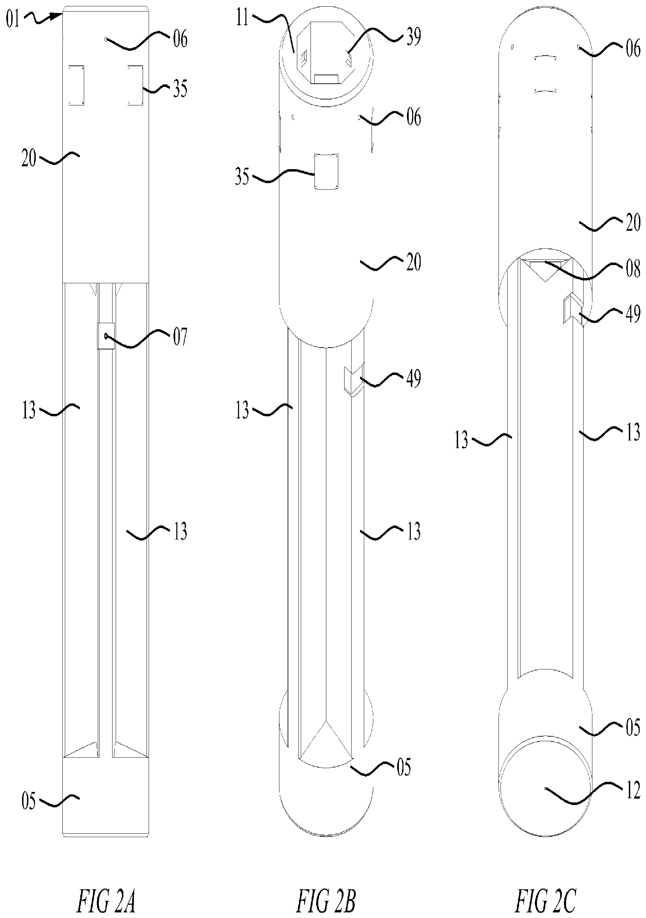

FIGs. 1A-2C, depict an embodiment of a pre-fabricated pole foundation 1. The pre-fabricated pole foundation 1 may be divided into four sections along a vertical axis of the pre-fabricated pole foundation 1. The four section include a pole cavity section 2 located at a top of the pre-fabricated pole foundation 1, a bridge section 3 located directly below the pole cavity section 2, a core section 4 located directly below the bridge section 3, and a base section 5 located at a bottom of the pre-fabricated pole foundation 1. In these embodiments, the pre-fabricated pole foundation 1 includes an upper portion that may include the pole cavity section 2 and a bridge section 3, and further may include a lower portion that may include the core section 4 and the base section 5. In at least this way the upper portion may include a pole cavity section 2 and/or a bridge section 3, and the lower portion may include a core section 4 and/or a base section 5.

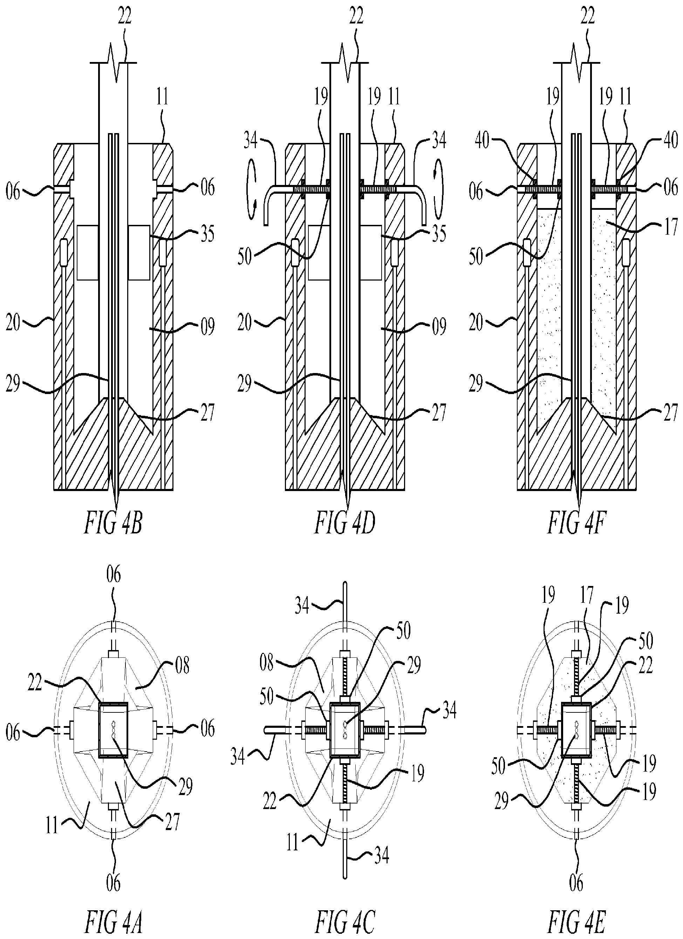

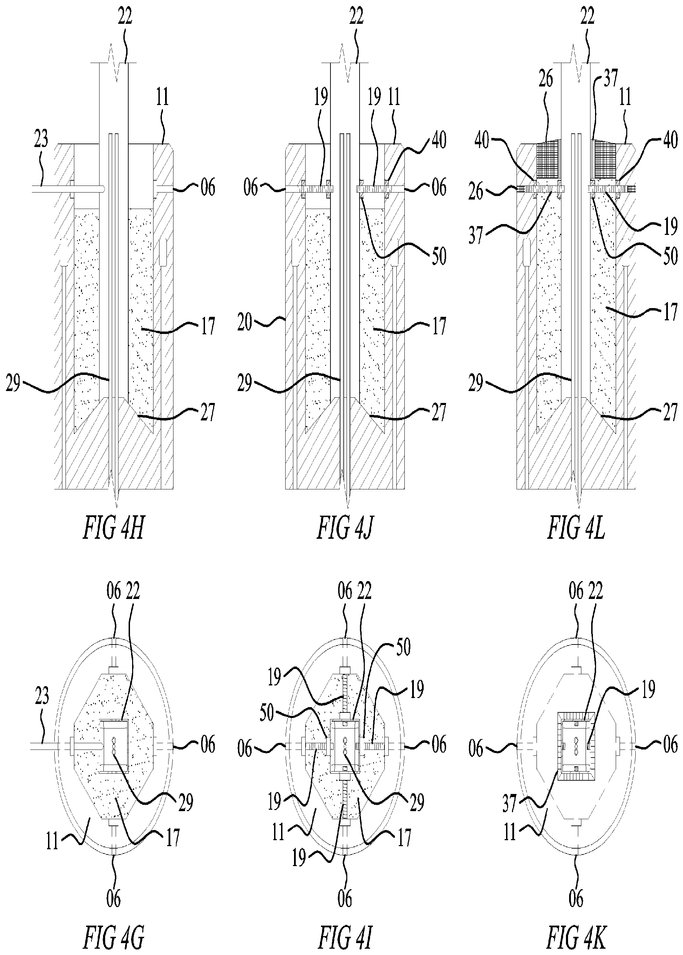

The pole cavity section 2 has a primary purpose to receive and retain an embedded pole 22 within a cavity 9 (See FIG. 4B). At a center of the cavity 9 bottom, a tapered structure 21 provides a support location for a bottom of the pole 22. At the upper regions of the cavity wall 20 a plurality of through leader bores 6 having a recess 39 at the interior surface of cavity wall 20, the recess 39 utilized to plumb the pole 22 when pole does not require anchoring. When pole 22 requires anchoring against rotation and uplift, recess 39 and leader bore 6 may be utilized to plumb the pole 22. Each through leader bore 6 has a horizontal axis that intersects the vertical axis of the pre-fabricated pole foundation 1. These bores 6 and corresponding recesses 39 may also serve as a hoisting attachment location to lower the foundation into the augured bore in the soil. In another embodiment, a continuous recess at the outside diameter wall 20 of the cavity section 2 provides an alternate pre-fabricated pole foundation 1 hoisting location.

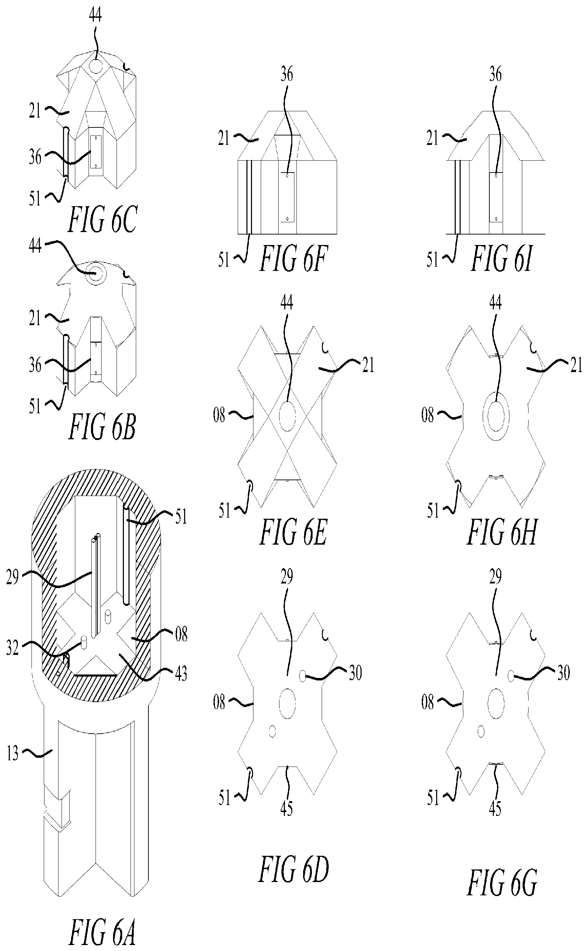

The cavity walls 20 may also retain electronic devices and/or enclosures and connectivity inside the pole cavity 9, in the pole cavity walls 20 and/or the pole cavity walls 20 exterior. The bridge section 3 top surface forms the tapered structure 21 providing support for the pole 21 when the pole is received within the cavity 9 of the cavity section 2. The tapered structure 21 can be made of the same material as the pre-fabricated pole foundation 1, and may be formed with the pre-fabricated pole foundation 1 as a unitary piece, as shown in FIGs. 1A-5D. In another embodiment the pre-fabricated manufacturing of the pre-fabricated pole foundation 1 may be simplified by removing alternative types of tapered structures 21, wherein the bridge section 3 top surface 43, having at its center through conduit/s 29 and between its parameter edges and its center, protrusions 32 acting as keyed elements to lock a pre-fabricated tapered structure 21 in position. This system and method reduces the pre-fabricated pole foundation 1 structure to a single product for a given range of pole's profile width and the choice of a keyed tapered structure insert 21 to a square (See FIGs. 6D-6F) or a round pole option (See FIGs. 6G-6I). The tapered structure insert 21 is made of hardened material and may have internal cavities 30 to correspond to the protrusion 32. In some embodiments, the top surface 43 may include recesses and the tapered structure inserts 21 may include protrusions in order to act as keyed elements to lock the pre-fabricated tapered structure 21 in position. In some embodiments, the tapered structure 21 may also be constructed of two parts having low friction contact surfaces enabling the top part to horizontally rotate, facilitating easier pole clocking. In one embodiment, guidelines along the pole cavity walls with corresponding profile niches or protrusions at the insert outer parameter facilitate quick insertion.

At a vertical center of the bridge section 3, through conduit/s 29 allow a variety of wiring to run from below grade to the cavity section 2. Such wiring may also include ground wire. The bridge section's 3 outer walls are an extension of the cavity section wall 20. A through opening(s) 8 between the bridge section 3 cross-like inner tapered structure 21 at its center and the inner surface of the wall 20 to allow for granular fill material 17 or fill material 17 having similar structural properties to reach the core section 4 below the bridge section 3. Also, this opening permits moisture from above to seep through and thereby prevent issues caused by accumulated moisture. The vertical depth of the bridge may variable contingent on the axial load and lateral forces acting on the pole 22.

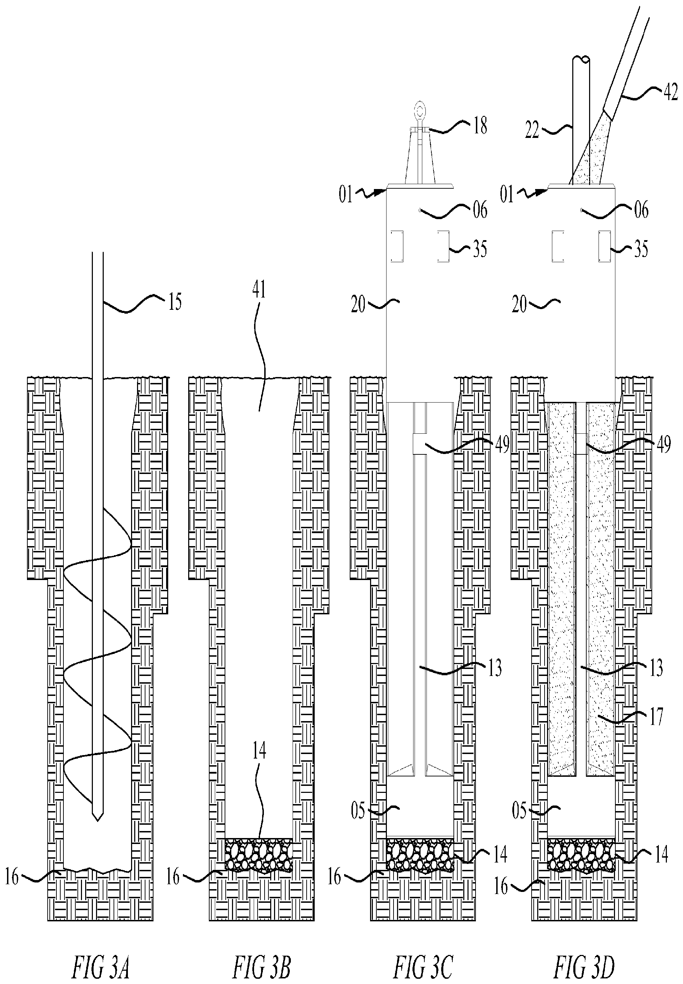

The core section 4 provides structural continuity from the cavity section 2 and bridge section 3 to the base section 5. Further, the core section 4 provides frictional and lateral resistance of the pre-fabricated pole foundation 1. The cores section 4 comprises a plurality of core walls 13 that are spaced annularly around the vertical axis of the pre-fabricated pole foundation 1. The core walls 13 may form a cross-shaped cross section, wherein the core walls 13 intersect and the through openings 8 for the tapered structure 21 are located above the intersection of the core walls 13 to allow granular or similar in structural properties material to reach the core section 4 through the bridge section 3. The fill material 17 may be wedged between the core walls 13 and the excavated bore 41, as shown in FIG. 3D. Where forms are needed, the fill material 17 is wedged between the core walls 13 and the form wall.

The base section 5 supports the entire load of the pole 22 and its assembly and the pre-fabricated pole foundation 1. In embodiments, the base section 5 diameter is the same diameter as the exterior cavity wall 20 of the cavity section 2. In special applications, where spread footing is needed, a keyed recess or protrusion at the bottom of the base section 5 anchors the pre-fabricated pole foundation 1 to a reciprocating key at the top of the spread footing.

### Foundation Electrical Design

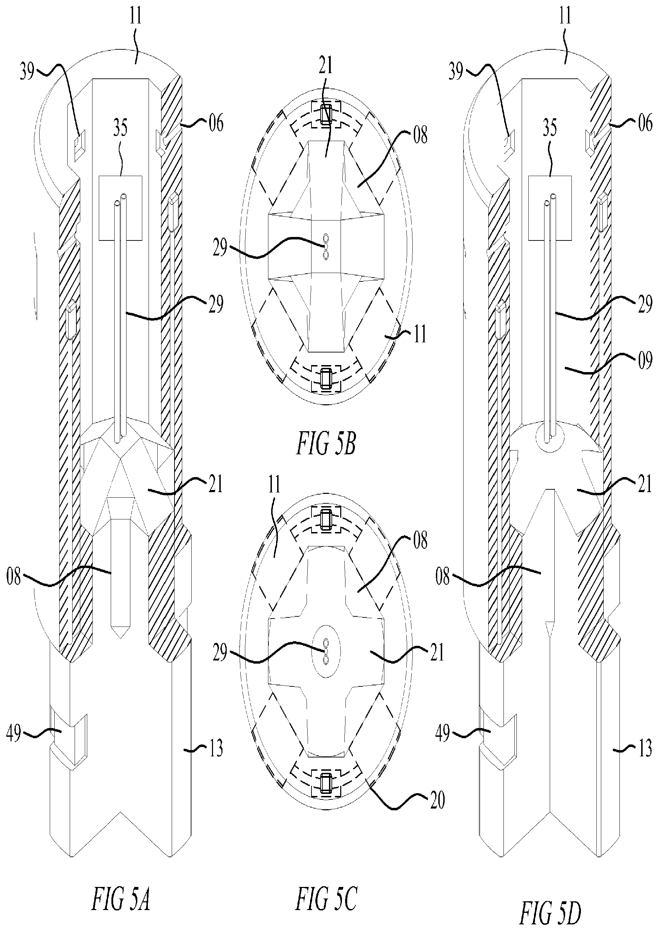

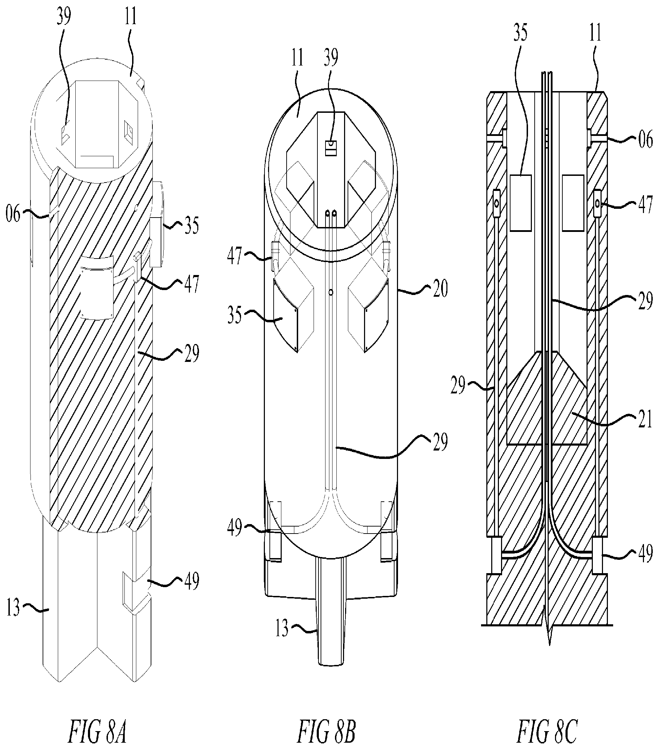

Referring to FIGs. 5A-5D and 8A-8C, the pre-fabricated pole foundation 1 enables both power and data to extend from below grade to one of the pole, the pole cavity, the pole cavity wall, the pole cavity wall exterior or combinations thereof. At the core section 4 the core walls 13 or recessed inside the core walls are non-corrosive J boxes 49 that are sealed to the elements. These J boxes 49 are foundation entry portals for power and data. Conduits 29 may travel from these portals through the bridge section 3 into the pole 22, or travel through the cavity wall 20 to electrical/data device enclosures 35 embedded in the pole cavity wall 20 or to the pole cavity wall 20 interior/exterior surfaces. Some embodiments may have a combination of the above and may also have power and/or data enter from below grade directly into the pole cavity 9 through the filled granular or similar in structural properties material. The conduit 29 rising from below grade through the pole cavity wall 20 may employ a splice box or a junction box 47 also embedded in the wall 20 and may divert power or divert power and data to a plurality of openings and/or enclosures 35 in the cavity wall 20. Through the vertical center of the foundation from the pole cavity 9 down to the foundation base 5 a pre-fabricated bore may house a grounding wire. That grounding wire at the foundation base connects to a grounding spike, grounding the pole 22 or the pole 22 and pole cavity 9 devices.

### Foundation Material and Fabrication

pre-fabricated pole foundation 1 can be made of concrete or any other flame-retardant, structurally-sound, lightweight material. The pre-fabricated pole foundation 1 wall design may incorporate impact-absorbing material and/or be constructed to absorb impact, reducing health risks to humans. Some pre-fabricated pole foundation 1 material may also be shipped to site, broken down to separate sections with capacity to be quickly assembled onsite. The pre-fabricated pole foundation 1 is fabricated by 3D printing .

It has been contemplated that the component of the pre-fabricated pole foundation 1 may be formed completely from cement or some type of cement mixture in a cast or the like. It has further been contemplated that the components of the pre-fabricated pole foundation 1 may be formed of a polymer material or material having polymer-like structural properties including but not limited to fire-resistant material and/or non-corrosive material. Further, in embodiments of the pre-fabricated pole foundation 1 formed of a polymer material, some or all of the components may have a honeycomb structure and/or other cellular structure. For example and without limitation, at least one of the cavity section, the bridge section, the core section, the base section, or combinations thereof comprise a honeycomb structure. Forming the pre-fabricated pole foundation 1 of a polymer and further having a honeycomb structure results in a pre-fabricated pole foundation 1 having much less weight than cement foundation for supporting the same size pole assembly. The polymer and honeycomb design also provide for shock absorbing characteristics that are improved over cement pole foundations. The polymer with or without the honeycomb structure provides for reduced weight foundation that further does not change the structural integrity required for the support and operation of a pole assembly.

Additionally, the soil type in which the pre-fabricated pole foundation 1 is installed provides certain characteristics that determine the size of pre-fabricated pole foundation 1. The soil properties may require that for a certain weight of a pre-fabricated pole foundation 1 and pole assembly installed the foundation needs to be a certain size within the soil in order to provide the necessary normal force to support the foundation and pole assembly installed properly. This very much dependent on the weight of the foundation and pole assembly. An easy way to reduce the size of the pre-fabricated pole foundation 1 is to form it of polymer and insert honeycomb structure to reduce material and weight. Because of the lighter combined weight of the pre-fabricated pole foundation 1 and the pole assembly, the pre-fabricated pole foundation 1 may require a smaller foundation base surface area to support the combined weight, thereby allowing for a smaller shaped pre-fabricated pole foundation 1 that would be needed in a comparable cement pole foundation, and thereby requiring less material and space for storing and shipping and for easier installation of pre-fabricated pole foundation 1.

### Weight Consideration in Design

The economic feasibility of the pre-fabricated pole foundation 1 is to a large degree dependent on the proximity of a fabrication plant to a construction site. The greater the distance, the higher the transportation cost. Granular or similar in structural properties material cost is low and the material is typically readily available in proximity to construction sites. To reduce transportation cost, the pre-fabricated pole foundation 1 design cores or removes any excess weight while maintaining full structural integrity.

### Pole Assembly Erection Process

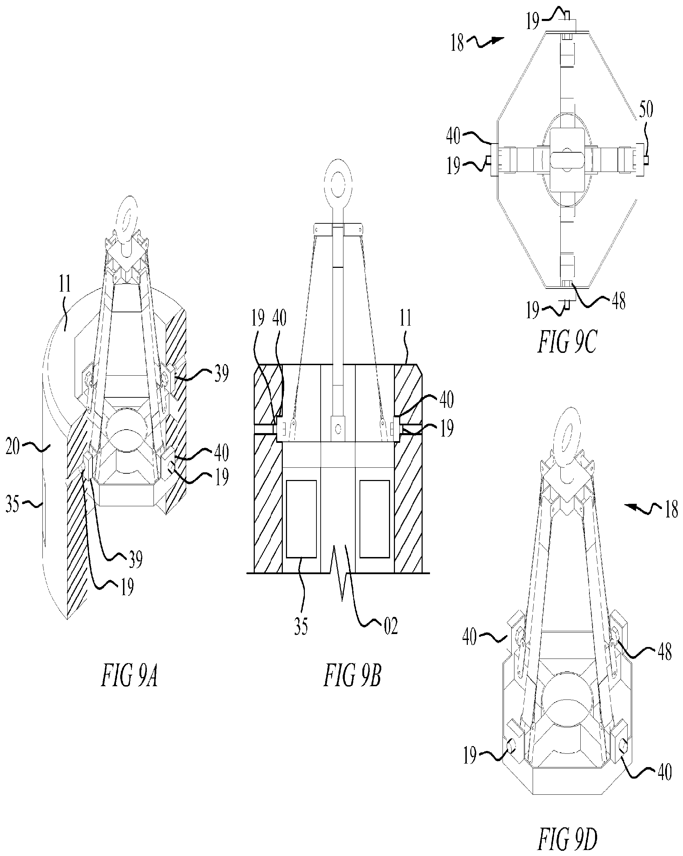

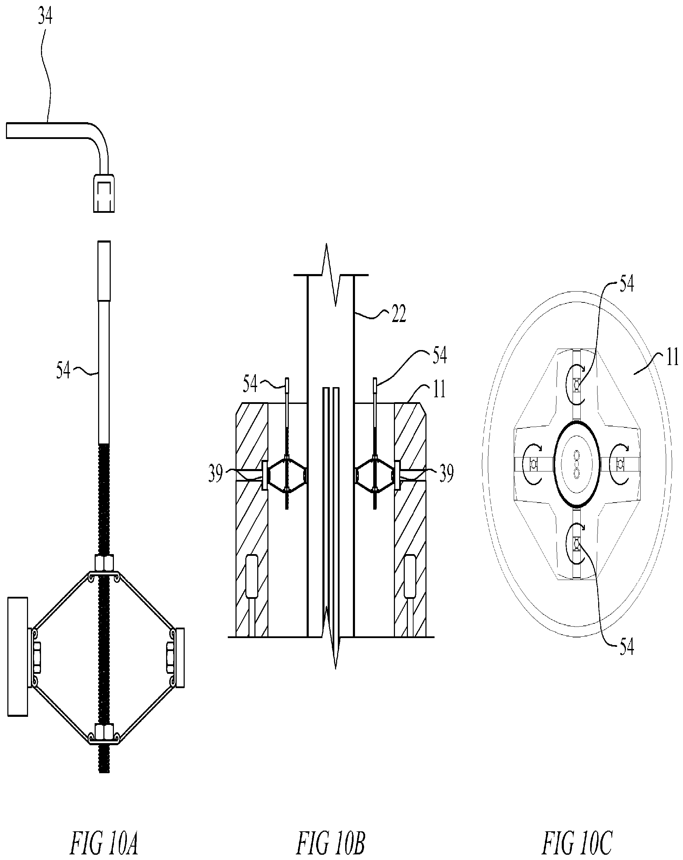

The key steps to erecting a pole assembly are generally shown in FIGs. 3A-3D, 4A-4L, 9A-9D, and 10A-10C. These steps include for example:

Auger a bore 41 in the soil 16 using an auger bit 15. The bore 41 may be slightly larger than the pre-fabricated pole foundation 1 diameter minimally disturbing the surrounding soil. Where soil 16 is unstable, excavation pit width may be wide enough to accommodate a pre-fabricated form slightly larger in diameter of the pre-fabricated pole foundation 1. Both bore 41 and excavated pit depth are contingent on structural specification and may include additional depth for bedding 14. When using the excavated method following the insertion of the form in the pit, plumb the form and anchoring it, the gap between the undisturbed soil and the form may be back filled, vibrated and compacted.

In order to insert pre-fabricated pole foundation 1 into the bore 41, hoisting harness 18 is inserted and secured in pre-fabricated pole foundation 1 using pole cavity wall insert plates 40 that are inserted within recesses 39. A connector 48 may then be used to connect the hoist 18 to the insert plates 40. The pre-fabricated pole foundation 1 may then be lifted and then lowered into the bore 41 or the form.

Once the pre-fabricated pole foundation 1 is lowered within the bore 41, the pole 22 may be lifted and lowered through the cavity 9 until the pole bottom end rests on the tapered structure 21 at the bottom center of the cavity.

Plumb devices 34 or 54 may be utilized to apply multi-directional lateral force at the upper region of the cavity wall 20 while having the tapered pole support structure 21 as a pivot point to plumb the pole. When there is no need to anchor the pole, removable expandable alignment devices 54 can be wedged between the pole and the recesses 39 in the foundation cavity wall. In operation, the expandable alignment devices 54 may include an actuator that may be manually operated with a tool 34, such as, but not limited to a wrench, to turn the actuator and extend the expandable alignment devices 54 laterally between the cavity wall 20 and the pole 22 in order to apply force to the pole 22 to pivot the pole 22 about the tapered structure for alignment. Use of three or four expandable alignment devices 54 work to plumb the pole by rotating the actuators gradually and in a controlled manner, the pole 22 may be made plumb. In another embodiment the expandable and removable plumbing devices can be substituted by the plumb devices 34 that may comprise bolts and threaded retainer plates 40. The threaded retainer plates 40 are anchored in recesses 39 located at the cavity interior surface of wall 20. By rotating the bolts gradually and in a controlled manner, the pole 22 may be made plumb. These plumb devices 34 may be used for both making the pole plumb and anchoring the pole against rotational and uplift forces.

After pole 22 has been made plumb, granular fill material 17 or fill material 17 similar in structural properties, such as, but not limited to granular fine material may be poured into the pre-fabricated pole foundation 1 through the cavity 9 through the opening 8 of the tapered structure 21 and into the core section 4 between the core section 4 and the bore 41 opening to a level just below the alignment devices 34. The alignment or plumb devices 34 may be removed and replaced with anchoring bolts if anchoring is needed. Prior to inserting anchoring bolts, a drill bit may be inserted through the leader bore holes 6 to drill a bore inside the pole 22. The anchoring bolts may be inserted through the leader bore holes 6 and through their respective recesses 39, and then, thread the alignment bolt back through the leader bores until it penetrates the pole 22. In a similar embodiment, the bolt can be inserted through the foundation's wall cavity opening 9. Both methods secure the pole 22 against rotation and uplift forces. Following the securing of the bolts to the pole, additional granular fill material 17 or fill material 17 with similar structural properties may be added above bolts. The fill material 17 may be vibrated to assure filling any voids from the bottom of core section 4 to top of pole cavity 9.

A grout or similar material cap 26 may fill the inner top of the pole cavity 9 having a slope away from pole. Elastomeric or similar material properties form a material break between pole and grout-like material to eliminate stress on the grout cap. Further, plugs may be inserted within the leader bore 6 (if applicable) at the foundation's cavity exterior walls 20. Prior to plugging the bores 6, insert material break filler may be inserted within the bores 6 to avoid grout bonding to bolts. Both the pole 22 and the foundation 1 are designed to facilitate easy replacement. Replacement only requires breaking the grouted fill seal and removing the plugin of fills at the cavity walls.

According to some embodiments, a method of installing a pre-fabricated pole foundation and a pole assembly includes: forming bore within a portion of ground soil; hoisting and lowering a pre-fabricated pole foundation within the bore, wherein the pre-fabricated pole foundation comprises: a cavity section having a pole cavity, an cavity wall and a tapered structure located on a bottom end of the pole cavity within the cavity wall; a bridge section having an integral or a detachable tapered structure; a core section having core walls; and a base section; hoisting and lowering a pole assembly within the pole cavity of the cavity section of the pre-fabricated pole foundation; supporting the pole assembly on the tapered structure; pivoting the pole assembly on the tapered structure in response to operation of alignment devices to plumb the pole assembly; and filling with fill material open voids from the core section, through the bridge section up to the cavity section, wherein the fill material is level below a top of the cavity section.

The method may further include diverting moisture collection in and around the pole through the fill material; and grounding a pole assembly in response to extending a ground wire through a foundation vertical center opening and connecting the ground wire to a spike mounted to the base section.

The installation of the pole assembly may include bringing power to the foundation and, through embedded conduits in the foundation, and run power to pole-mounted and pole cavity embedded devices. The installation may also include terminating grounding wire, placing, if needed, a surge protector and/or other devices at the pole base and/or pole cavity wall and then power up the assembly and verify proper operation.

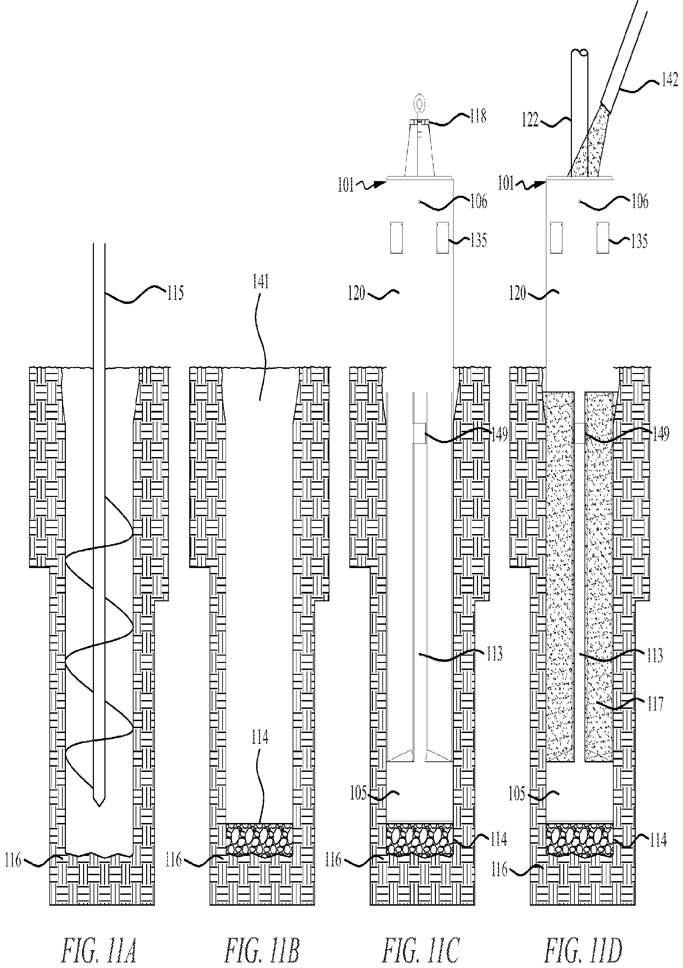

### Embodiment Described in Figs. 11A-15C

The pre-fabricated concrete foundation has significant disadvantages when evaluated against a pre-fabricated foundation with a volumetric enclosure and/or constructed of cellular structure. Truck loads are restricted to an allowable shipping weight. Heavy foundations necessitate the use of additional trucks, thus increasing shipping costs. Heavy foundation may also require the use of costly loading/unloading machinery while exposing workers to higher risk of injury.

Employing new technologies such as 3D printing enables the fabrication of cellular structures and/or large volumetric enclosure inside the foundation structure, overcoming the disadvantage of employing heavy pre-fabricated concrete foundation. As a result, more foundations can be loaded on a single truck, and the foundation installation requires a minimal load capacity machinery or none to drop the foundation into augured bore. Further, lightweight foundations pose lesser risk of bodily injury.

The present innovation cellular and volumetric design structures may include several embodiments:
1. A single volumetric or a plurality of volumetric enclosures at the vertical center of the foundation below the foundation's pole cavity.
2. A single volumetric or a plurality of volumetric enclosures at the vertical center of the foundation below the foundation's pole cavity and a cellular cell structure within the foundation walls and base.
3. A cellular structure throughout the entire body of the foundation.
4. A cellular structure within the foundation's walls.
5. The above embodiments with fill material consisting of gas or fluid or solid retained inside the foundation's walls.
6. The above embodiments with solid fill material that can reach the foundation core through the pole cavity.

The configuration above may include at least one inlet and at least one outlet to fill fluid into the foundation structure. The fluid can be water or any other admixture. The fluid can remain in a liquid state or in coming in contact with air or other fluid can change state and harden. At the inlet spout an anti-tampering cap is installed after filling the foundation with fluid. At the outlet spout, an anti-tampering cap or a cap with a breather or a valve can be installed. Having the additional weight of the fluid or the hardened material adds compressive axial weight to the foundation makes the foundation wall more resistant to impact and adds greater resistance to uplift forces. Granular solid material may also be used to ballast the foundation. The granular material can be poured through the inlet spout and/or through the pole cavity.

As described above, in special applications, where spread footing is needed, a keyed recessed protrusion at the bottom of the base section 5 anchors the prefabricated pole foundation 1 to a reciprocating key at the top of the spread footing. The present innovation in FIGS. 11A-15C expands on the prior teaching by further describing a keyed foundation. The keyed spread footing or both to retain a volumetric cavity and/or cellular structure, whereas the volumetric cavity or the cellular structure can be filled with fluid (72). In addition, the entire prefabricated foundation can be made of at least one contiguous element and when two or more contiguous elements are employed, these elements are mechanically keyed, they can employ fastening devices and they are field assembled (not shown).

This innovation can further simplify the pole erection process by eliminating the use of a threaded plate embedded in a recess in the pole cavity inner wall, replacing the threaded plate's functionality with a factory prefabricated threaded through bore, whereas the bore is made of the same material as the foundation wall.

Figs. 11A-D show the prefabricated pole foundation placement process inside an augured bore in the soil. In Fig. 11A the bore is augured. In Fig. 11B the bottom of the bore is bedded. In Fig. 11C the pre-casted foundation is lowered inside the bore. In Fig. 11D a fill material 117 is poured through the pole cavity 109 top making its way down to the top of the foundation base section 194. Fill material 117 occupies all the voids between the foundation's exterior wall 195 and the face of the bore in the soil. Within this disclosure it teaches about fill material 117 poured into the pole cavity 109 of the pre-fabricated foundation to provide lateral stability to the pole 122. Other fill material 117 is poured and compacted from the foundation exterior wall 195 providing lateral support to the foundation's core 104 and base sections 105 (not shown).

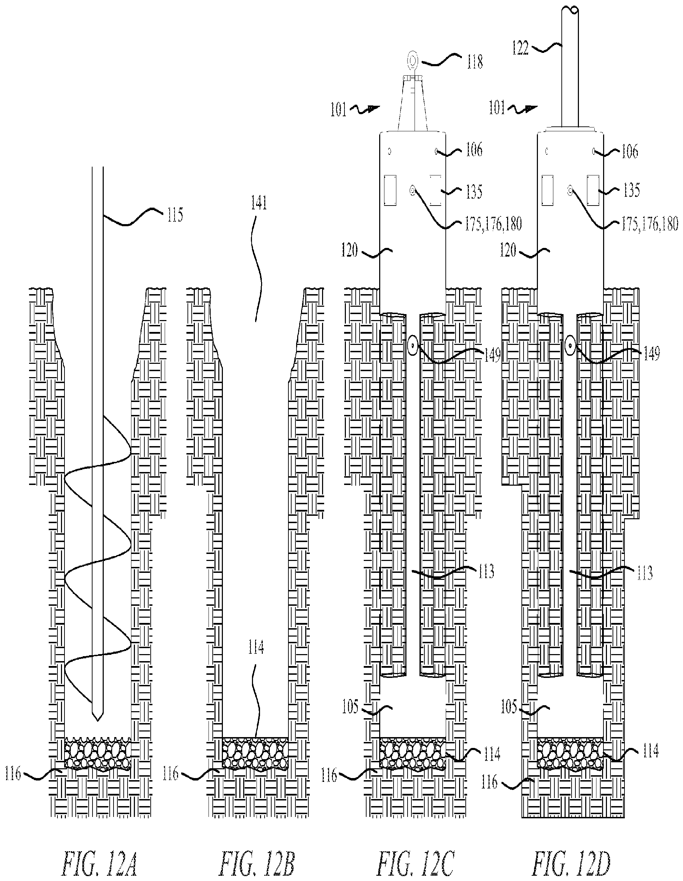

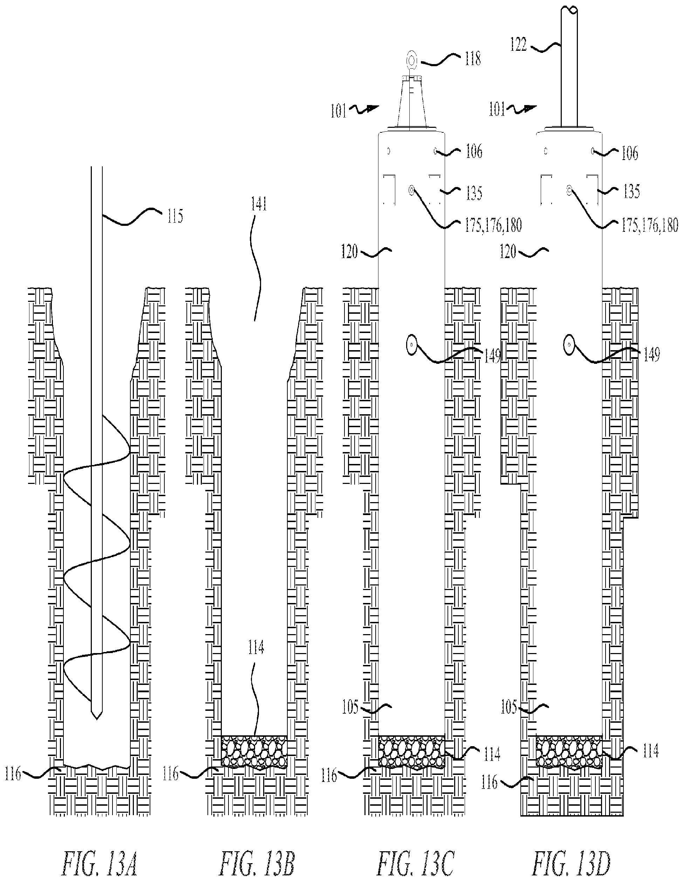

Figs. 12A-D and 13A-D show two elevational embodiments of the pre-fabricated foundation 101 placement process inside an augured bore with enclosed bottom pole cavity 109. Innovating both the parent patent and continuation 1, present invention show means to reduce shipping weight of the pre-fabricated foundation by introducing volumetric enclosure/s 173 and/or cellular structure 170 inside the foundation's structure. Figs. 12A-12D show the pre-fabricated foundation placement of a cruciform profiled core section 104 foundation 101 with an elongated volumetric enclosure 173 at the vertical center of the foundation extending the length of the core section 104. This embodiment can be filled with fluid 172 from an inlet spout 180 located at the pole cavity exterior wall 120 upper section. In a different embodiment, filled fluid 172 can also fill the cellular structure 170 inside the foundation's cellular walls 169 or the foundation's cellular walls 169 and the base core section 105 (not shown).

Figs. 13A-13D show the pre-fabricated foundation placement of a round profiled core section 104 foundation 101 with an elongated volumetric enclosure 173 at the vertical center of the foundation 101 extending the length of the core section 104. This embodiment can also be filled with fluid 172 as described above and perforate the fluid 172 into the cellular structure 170 of the foundation's cellular walls 169 and the base core section 105 (not shown). In a different embodiment, a substantial portion or all the embodiment structure can be fabricated of a cellular structure 170 and fluid 172 entering the inlet spout 180 can reach some or all the cells (not shown).

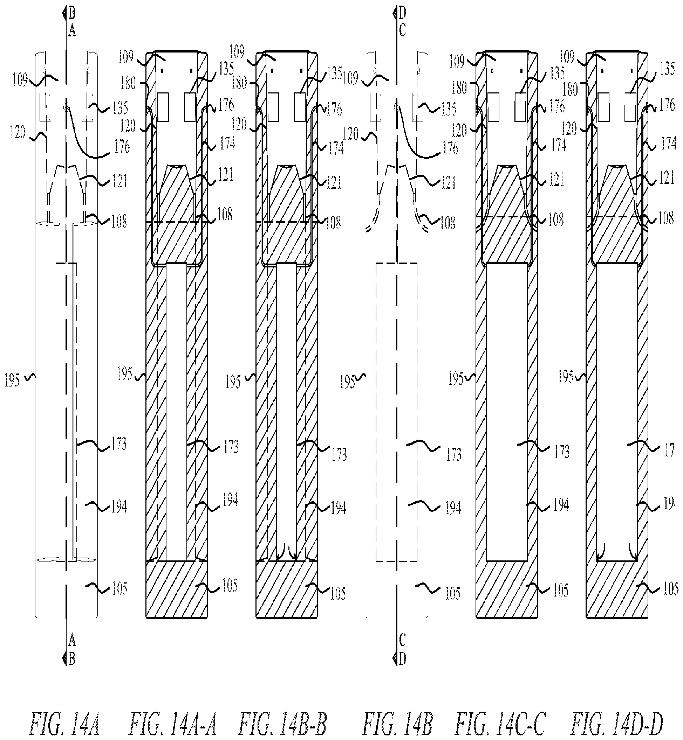

Fig. 14A and Fig. 14B show the elevation of the Figs. described in Figs. 12A-12D and 13A-13D. Fig. 14A-A and Fig. 14B-B show sections of the cruciform profiled foundation 101 at the core section 104 with a volumetric enclosure 173 extending along the core section's 104 vertical axis. Fig. 14A-A retains fluid at the volumetric enclosure 173 only, while Fig. 14B-B permits fluid 172 to travel through the foundation's walls cellular structure 170 and/or the foundation's walls cellular structure 170 and base section 105 cells. Figs. 14C-C and Fig. 14D-D show sections of the round profiled foundation at the top of the core section 194 with a volumetric enclosure 173 inside the foundation's wall extending along the core section's 104 vertical axis. Fig. 14C-C retains fluid at the volumetric enclosure 173 only while Fig. 14D-D permits fluid 172 to travel through the foundation's walls cellular structure 170 and/or the foundation's walls cellular structure 170 and base section 105 cells. The sections shown in Figs. 14A-A, 14B-B, 14C-C, and 14D-D share these common elements: inlet spout 180, fluid outlet 176, valve 175, fluid pipe 174, through opening 108, pole cavity 109, device enclosure 135, power/data conduit 129, and volumetric enclosure 173.

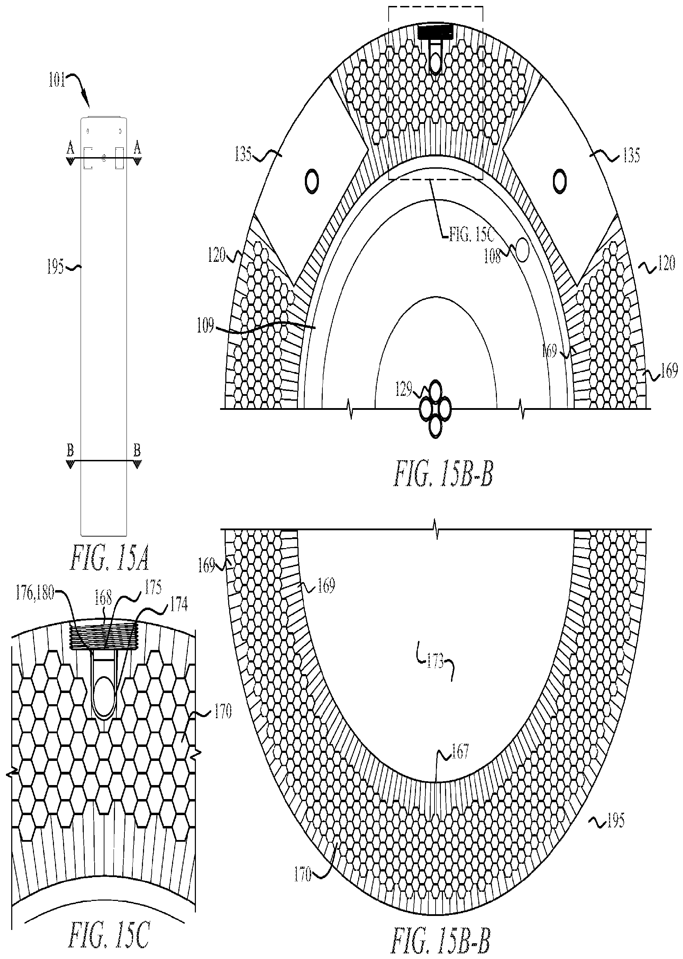

Figs. 15A, 15B-B and 15C show enlargements of the volumetric enclosure 173 and the cellular structure 170 inside the foundation walls. Fig. 15A shows the foundation elevation with horizontal section designators. Fig. 15A-A shows a partial horizontal section at the pole cavity 109. Elements enumerated include: the inlet spout 180, fluid pipe 174, cellular structure 170, exterior wall of pole cavity 120, foundation pole, power/data conduit 129, through opening 108, tapered structure 121, and device enclosure 135. Fig 15B-B shows a partial horizontal section at the bottom of the round core foundation above the foundation's base section 15. Elements enumerated include: cellular structure 170, top of foundation base 194, volumetric enclosure 173, cellular wall 169 and foundation exterior wall 195. Fig. 15C shows the horizontal enlarged section of the pole cavity 109 at the electrical/data enclosure 135 elevation depicting the inlet spout 180 opening and the fluid pipe 174 riser inside the cellular structure 170 wall to enable fluid 172 to travel to the volumetric enclosure 173 and/or perforate throughout the cellular walls of foundation including the base section 105.

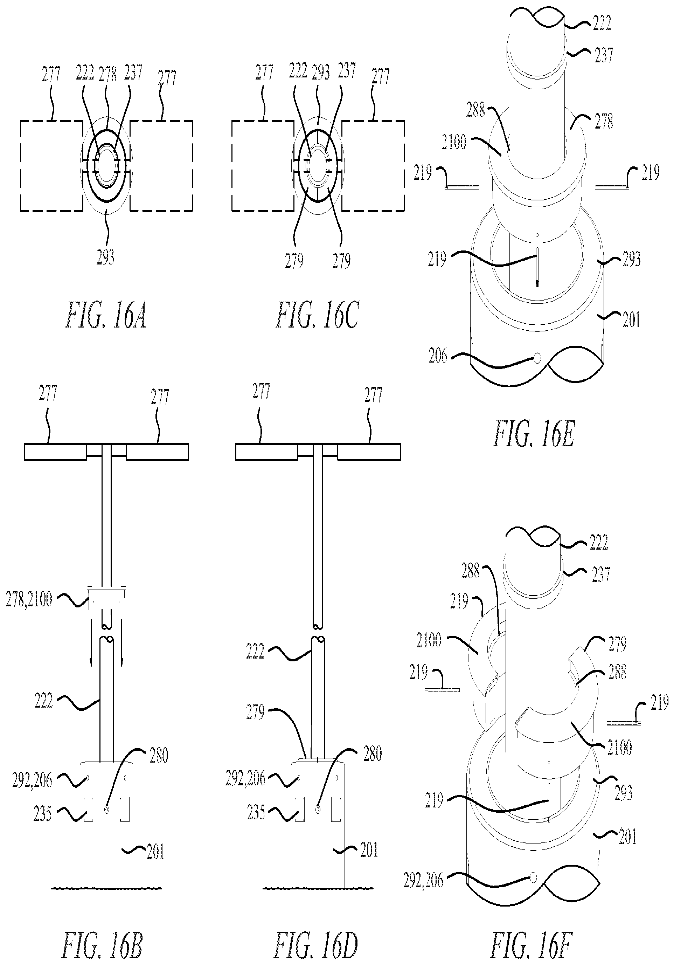

### Embodiment Described in Figs. 16A-23F

### Pole Foundation Erection Process

The conventional "pour-in-place" pole foundation construction and erection process entails the following steps:
1. Ordering materials such as steel rebar, gravel, plywood, and forms;
2. Scheduling onsite drop ship dates for the above materials;
3. Ordering luminaires and poles, often requiring that anchor bolts pre-ship prior to balance of order arrival;
4. Constructing the steel cage for the concrete foundation structural reinforcement;
5. Constructing plywood templates for the anchor bolts and secure the bolts with the template to cage;
6. Scheduling a date for concrete pour;
7. Augering foundation bores and, where needed, providing bedding material for the foundation (weather permitting);
8. Dropping forms with rebar cage into bores, plum and secure them, or dropping the steel rebar cages into forms after the forms were plumbed and secured in bores. The steel rebar cages could be inserted inside the form or following;
9. Making all pre-pour electrical connectivity prep work;
10. Backfilling and compacting soil around the forms if needed;
11. Scheduling a crane for pole standing;
12. Pouring concrete, vibrating inside the forms and waiting until concrete cures (weather permitting);
13. Assembling pole and luminaire(s) and/or other devices;
14. Using a crane, lower pole assembly on pole base securing pole to foundation with anchor bolts nuts;
15. Adjusting anchor bolts' nuts to plumb the pole;
16. Removing above grade forms and refinishing the foundation surfaces;
17. Pulling all electrical wire and securing the hand hole cover to pole;
18. Placing pole base cover or architectural nut covers on pole base plate;
19. Refinishing/touching up any scratches, and removing dirt from pole and foundation base; and
20. Powering up pole-mounted devices and verifying proper operation

The present innovation of pole foundation construction and pole erection process entails the following steps:
1. Ordering foundation, foundation components, pole and luminaires;
2. Augering bores in the soil and bedding the bores' bottom if needed;
3. Dropping pre-casted foundation into the bores;
4. Pulling below grade power into the foundation;
5. Backfilling and compacting soil around the foundation;
6. Dropping a pole with luminaires, absent a base plate, into the foundation pole cavity;
7. Inserting the I-cap into position and then securing the pole assembly;
8. Sealing gap between pole and I-Cap with elastomeric compound;
9. Touching up any scratches and removing dirt from pole and foundation base; and
10. Trimming all electrical connections, powering up and verifying that all luminaires and/or other devices operate properly.

Coupled with the art described in the parent patent and continuation 01, the I-cap enclosure device eliminates 10 steps from the conventional foundation construction and pole erection.

The I-Cap is prefabricated using state of the art manufacturing technologies that significantly reduce the pole erection time. This reduction lowers the overall production costs and the likelihood of bad weather having an adverse impact on the construction schedule. The innovation enhances its parent patent and continuation 01, consolidating and streamlining processes and means into an all-in-one device.

### About the I-Cap

The I-Cap is a just-in-time manufactured device located at the foundation's 201 top, filling the gap between the pole foundation cavity's 209 inner wall and the pole 222, while also providing cavity moisture protection. State of the art technology is capable of producing complex forms in real time. Today, for example, manufacturing by means of 3D printing can produce components at the Space Station by transmitting 3D files from Earth in real time. At the time an order is placed for a prefabricated pole foundation 201 and pole 222, both the inner diameter of the pole cavity 209 and the outer diameter of the pole 222 are known. Both the pole and the foundation are manufactured to precision. A computer program then produces the I-Cap's 2100 manufacturing data configuring the physical form of the embodiment, the structural design and choice of material.

The I-Cap all-in-one enclosure device:
1. Transfers the pole's lateral forces to the foundation's walls;
2. Is the pole's anti-rotation lock;
3. Is the pole's anti-uplift lock;
4. Prevents moisture from entering the foundation's pole cavity;
5. In concert with the tapered structure at the bottom of the foundation's pole cavity plumb the pole: and
6. Eliminates the need to fill the pole foundation cavity with fill material to transfer lateral loads to the foundation's walls. The fill may be used only to ballast the foundation where needed.

The present innovation employs the two key elements of the parent patent: a tapered structure 221 at the pole cavity's 209 bottom center, and at least one anti-rotation bolt 225, 248 inserted through the pole cavity's walls 220. The bolt 225, 248 can be inserted to engage the pole 222 along most of the pole section embedded inside the foundation's pole cavity 209 except at the very top and bottom. No bolt 225, 248 is needed to plumb the pole as the I-Cap enclosure plumbs the pole. An alternate embodiment with bolts securing the I-cap 2100 to the foundation structure from above may employ only a single horizontal bolt 225, 248 below the I-Cap to prevent the pole from rotation (not shown). In several foundations configuration the I-Cap 2100 enclosure enables pouring ballasting fill material 217 through the pole cavity to the foundation base section 205 as well as inserting a vibrator to compact the fill material. The I-Cap eliminate the need to employ fill material 217 to transfer lateral pole forces to the foundation's walls 220.

The I-Cap enclosure device 2100 is fabricated from organic or inorganic substantially non-corrosive hardened material, resistant to the elements. The device structure can be constructed of one or a series of volumetric enclosures 273 or a cellular structure 270 with a plurality of small voids. The device manufacturing methods include but are not limited to 3D printing and injection molding. The device form is adaptable to complement the form of the pole foundation cavity's 209 inner wall and the form of the pole 222. The I-Cap 2100 form can be square, round or shaped to take any other form complementing both the structural and architectural requirements. The I-Cap 2100 can be fabricated from a monolithic embodiment, or made of several embodiments joined together. The monolithic embodiment is typically inserted at the narrow side of the pole 222 shaft, and then slides into position at the top of the foundation pole cavity 209. The multi-component embodiment assembly is inserted at the top of the pole foundation cavity 209. Both the monolithic and the multi-component embodiments have a recess 288 in their interior wall perimeters. The I-Cap is secured to the foundation from above or from the pole foundation cavity wall using bolts 225, 248, and then, the recess is filled in with an elastomeric compound to prevent moisture from travelling into the foundation pole cavity 209. The top mounted bolt I-Cap 2100 walls have a keyed lock 297 to accommodate a foundation keyed lock 2101 in the foundation's pole cavity walls. The foundation's keyed lock has a threaded bore 2102 to which the I-Cap top bolt/s 299 mount to. The I-Cap can be removed and re-installed as the pole and the foundation.

The I-Cap possesses the following common properties, regardless of its form:
1. It has at least one through bore in its body to enable bolts to secure it to the foundation. The bore may be threaded or non-threaded threaded/inserted from the top face or from its side.
2. It may employ a separate bolt to secure the pole against uplift and/or rotation.
3. Its outer circumference, in part or in whole, abuts the inner face of the pole foundation cavity.
4. Its inner circumference, in part or in whole, abuts the pole's outer circumference.
5. Its exterior top face slopes away from the pole.
6. It extends outwardly beyond the inner wall of the pole foundation cavity having an overhung lip/ledge preventing moisture travel into the pole cavity.
7. It has a recess at its top exterior face for placement of elastomeric compound to prevent moisture travel into the pole foundation cavity.

Fig. 16A shows a plan view of a pole assembly employing two luminaires 277 resting in a pre-fabricated foundation 201 with a monolithic I-cap enclosure 278 engaging the pole 222 in the foundation's pole cavity 209.

Fig. 16B shows the assembly of Fig. 16A in elevation with the monolithic I-cap enclosure 278 lowered along the pole 222 shaft into position upon resting the pole assembly on the tapered structure 221 at the bottom of the pole cavity 209. Also shown is an inlet spout 280 to pour fluid 272 into the foundation 201. Electrical/data devices enclosure 235 and leader bore to facilitate engaging, plumbing and securing the pole 222 assembly employing the I-cap 2100 to the foundation 201.

Fig. 16C shows a plan view of the pole assembly employing two luminaires 277 resting in a pre-fabricated foundation 201 with multi-part I-cap enclosure 279 engaging the pole in the foundation's pole cavity 209.

Fig. 16D shows the assembly of Fig. 16C in elevation with the multi-part I-cap enclosure 279 engaging the pole 222 and the foundation 201 and providing moisture protection to the pole cavity 209. Also shown is an inlet spout 280 to pour fluid 272 into the foundation 201 electrical/data devices enclosure 235 and leader bore to facilitate engaging, plumbing and securing the pole 222 assembly employing the I-cap 2100 to the foundation 201.

Fig. 16E shows an enlarged and exploded perspective of top of foundation 293. Also shown are the compressive filler/elastomeric compound 237, the pole 222, the top of the monolithic I-cap 278, pole anti-rotation/uplift bolt 219, and the top of foundation 293. The monolithic I-cap enclosure 2100 slides down the pole 222 shaft and engages the pole 222 by plurality of bolts 219. The bolts 219 are inserted through the pole cavity 209 wall and the monolithic I-cap enclosure 2100. Once the I-cap enclosure 2100 is secured in place, the compressive filler/elastomeric compound 237 is placed in the I-cap recess 288 to protect the pole cavity 209 against moisture entry.

Fig. 16F shows an enlarged exploded perspective of top of foundation 293. Also shown are the compressive filler/elastomeric compound 237, the pole 222, the two-part I-cap enclosure top 279, the pole plumbing and anti-rotation/uplift bolt 219, and the top of foundation 293. The two-part I-cap enclosure 2100 is inserted into the pole cavity 209 embracing the pole at their inner walls and the pole cavity 209 with their outer walls. Then, bolts 219 are inserted through the pole cavity 209 wall and through the I-cap enclosure 2100, plumbing or securing or plumbing and securing the pole 222. Then, compressive filler/elastomeric compound 237 is placed in the I-cap recess 288 to protect the pole cavity 209 against moisture entry. Bolt 219 can be engaged a threaded bore in the pole cavity 209 wall, in the I-cap 2100 or both.

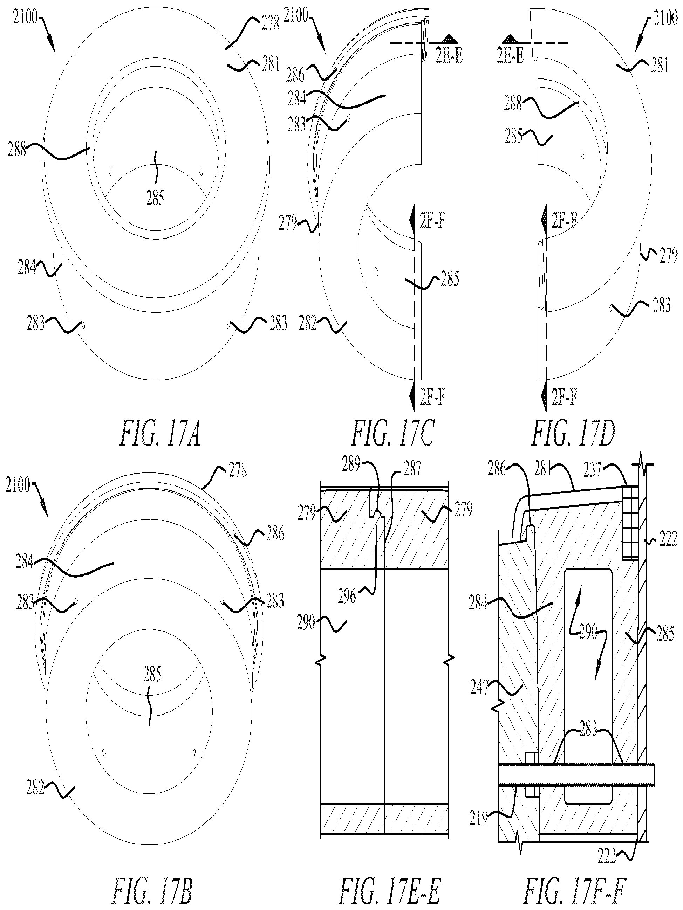

Figs. 17A and 17B show top and bottom perspectives of the I-cap enclosure 279 monolithic embodiment. Fig. 17A shows the I-cap recess 288, the inner wall 285, the top 281, the outer wall 284, and a through bore 283. Fig. 17B shows the cap's lip 286, the outer wall 284, the inner wall 285, a through bore 283, and a cap's bottom face 282. The I-cap enclosure slides down along the pole 222 shaft and is wedged between the pole 222 and the pole cavity 209 at the top of the pole cavity 211. The through bores 283 are aligned with the through bolt port 292 in the pole cavity 209 wall and bolts 219 secure the pole 222 and the I-cap to the foundation 201.

Figs. 17C and 17D show bottom and top perspectives of half of a multi-part I-cap enclosure 279. In this embodiment the two parts are joined together after the pole 222 shaft rests on the pole cavity 209 tapered structure 221. The multi-part I-cap 279 is inserted at the top of the pole cavity 211 having an overlapping lip 286 to direct moisture away from the pole 222 toward the exterior edge of the pole cavity top 211. Fig. 17C shows the cap's lip 286, the outer wall 284, a through bore 283, and the inner wall 285. Fig. 17D shows the top of the I-cap 281 recess 288 into which compressive filler/elastomeric compound 237 is placed, a through bore 283, and the cap's inner wall 285. Also shown are two enlarged sections designators showing the I-cap's interlocking lips 286 in more detail.

Fig. 17E-E shows a partial section of the multi-part I-cap 279 enclosure interlock at the seam 287 and the cap's top lip 289 is keyed into the cap's bottom lip 296. The multi-part I-cap enclosure 279 cross-section may include voids 290 reducing its weight and material without compromising its ability to transfer the pole's 222 lateral loads to the foundation 201. The voids may be enclosed by radial spokes originating at the multi-part I-cap's enclosure's 79 inner wall 285 terminating at the outer wall 284.

Fig. 17F-F shows a partial transverse section at the top of the pole cavity 211 centered between the pole 222 and the pole cavity wall 247. Wedged between them is the I-cap enclosure 2100 having an overhang over the top of the pole cavity wall 247 lip 286. The top of the I-cap 281 is sloped outwardly and down from the face of the pole 222 and compressive filler/elastomeric compound 237 occupies a recess 288 in the I-cap enclosure's 2100 top inner wall 285. Also shown are a bolt 219 extending from the pole cavity wall 247 through the I-cap enclosure 2100, extending into the pole 222 wall. This embodiment shows the I-cap enclosure through bore 246 threaded. In other embodiments the I-cap enclosure 2100 bore can be smooth faced.

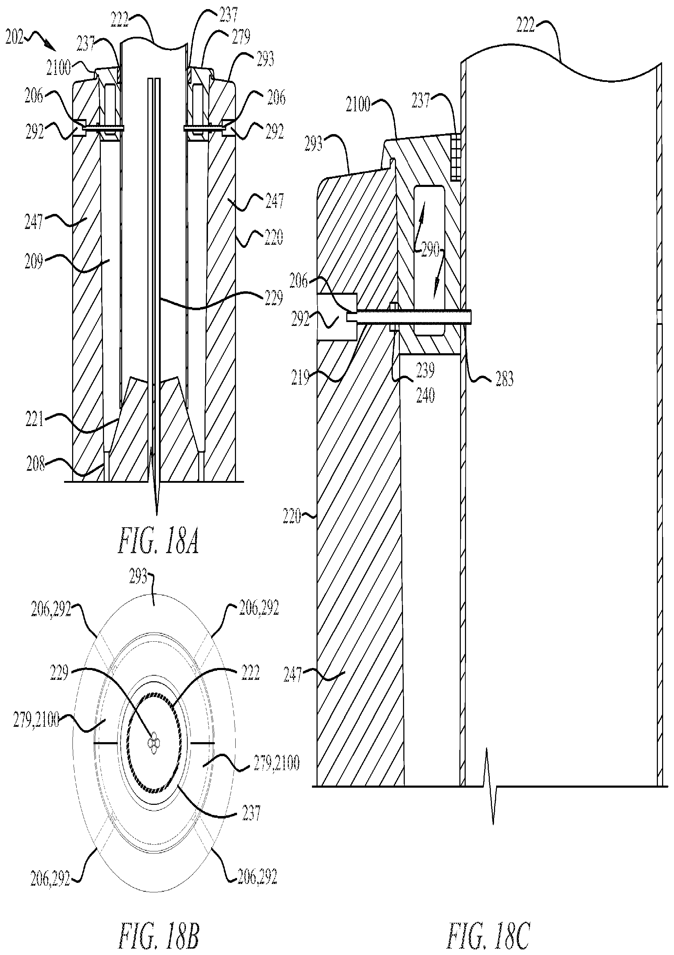

Fig. 18A shows a section through the pole cavity 209. At the vertical center of the cavity resting on a tapered structure 221 is a pole 222 with conduits 229 running at its center. Below and away from the tapered structure 221 a through opening 208 evacuates any trapped moisture inside the pole cavity 209. At the top of the pole cavity, wedged between the pole cavity wall 247 and the pole 222 is the I-cap enclosure 2100. The enclosure caps the top of the foundation 293 preventing moisture travel into the pole cavity 209. The enclosure also aligns and secures the pole to the foundation 1 employing bolts 219. The bolts are inserted and torqued inside the exterior of the foundation wall through bolt ports 292. Following installation, the ports can be filled and capped.

Fig. 18B shows a plan view of section 3A (above) employing multi-part I-cap enclosure 279. Also shown are conduits 229, the pole 222, the top of foundation 293, compressive filler/elastomeric compound 237, and in dash line below a plurality of through bolt ports 292.

Fig. 18C shows a partial enlargement of the top of the pole cavity wall 247 with the I-cap enclosure 2100 wedged between the pole cavity wall 247 and the pole 222. This partial enlargement shows a recess 239 in the inner wall of the pole cavity 209 and a threaded insert plate 240 through which the bolt 219 is threaded. This fastening method is one example of several methods to plumb and secure the pole. Other methods may include a threaded I-cap enclosure and/or pre-fabricated threads inside the pole cavity wall 247.

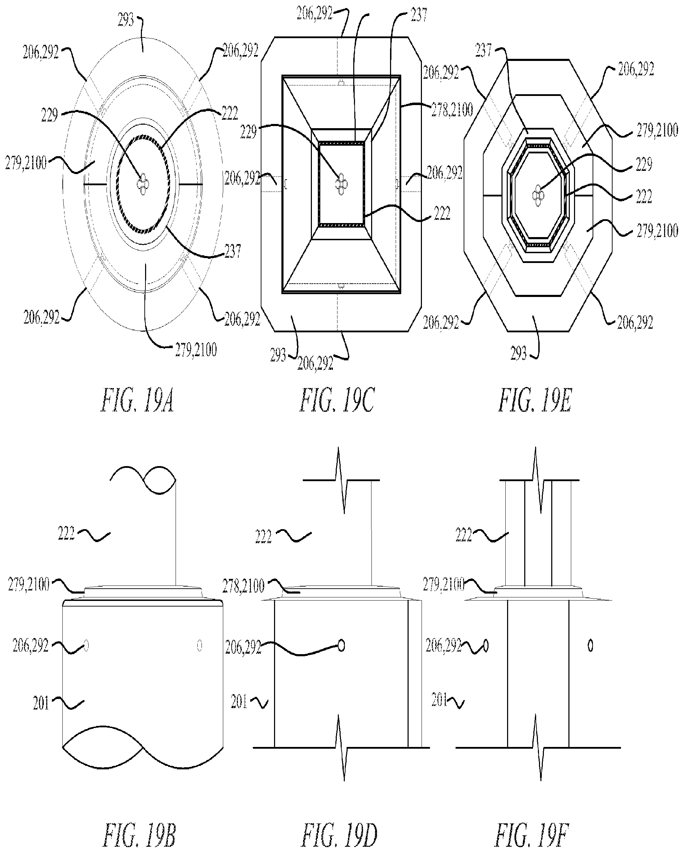

Figs. 19A and 19B show the multi-part I-cap enclosure 279 in plan and elevation views inside a round pre-fabricated pole foundation 201. Fig. 19A shows the top of the foundation 293, the pole 222, conduits 229, compressive filler/elastomeric compound 237, multi-part I-cap enclosure 279 and through bolt ports 292. Fig. 19B shows the pole 222 inside multi-part I-cap enclosure 279 on a round pre-fabricated foundation 1 with a through bolt port 292.

Figs. 19C and 19D show a monolithic I-cap enclosure 278 in plan and elevation views inside a squared pre-fabricated pole foundation 201. Fig. 19C shows the top of the foundation 293, the pole 222, conduits 229, compressive filler/elastomeric compound 237, monolithic I-cap enclosure 278, and through bolt ports 292. Fig. 19D shows the pole 222 inside the monolithic I-cap enclosure 288 on a square pre-fabricated foundation 201 with a through bolt port 292.

Figs. 19E and 19F show the multi-part I-cap enclosure 279 in plan and elevation views inside an octagonal pre-fabricated pole foundation 201. Fig. 19E shows the top of the foundation 293, the pole 222, conduits 229, compressive filler/elastomeric compound 237, multi-part I-cap enclosure 279 and through bolt ports 292. Fig. 19F shows the pole 222 inside multi-part I-cap enclosure 279 on an octagonal pre-fabricated foundation 201 with a through bolt port 292.

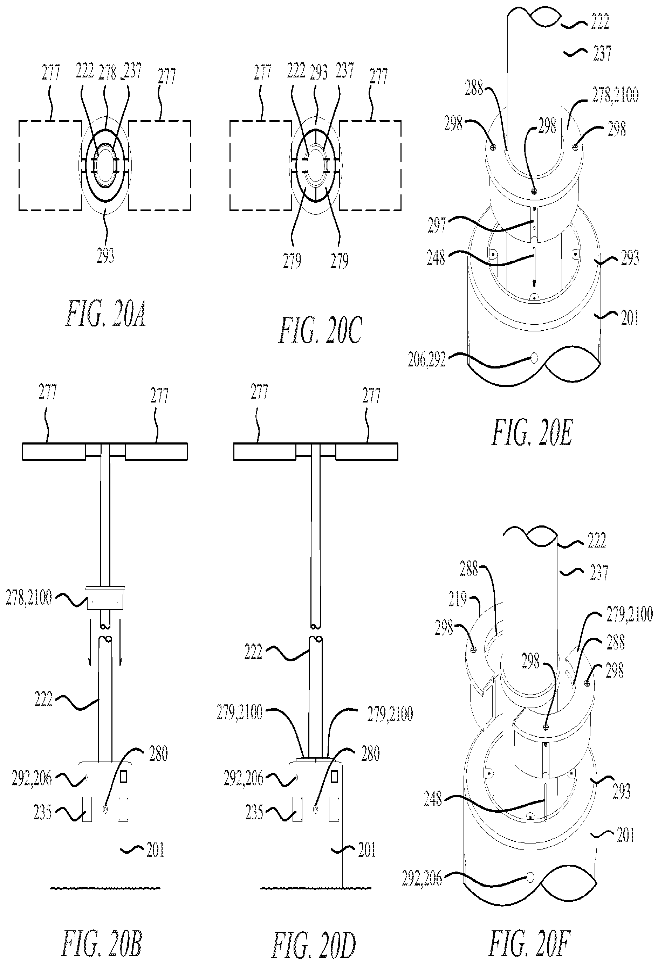

Fig. 20A shows a plan view of a pole assembly employing two luminaire 277 resting in a pre-fabricated foundation 201 with a monolithic I-cap enclosure 278 engaging the pole 222 in the foundation's pole cavity 209.

Fig. 20B shows the assembly of Fig. 20A in elevation with the monolithic I-cap enclosure 278 lowered along the pole 222 shaft into position upon resting the pole assembly on the tapered structure 221 at the bottom of the pole cavity 209. Also shown is an inlet spout 280 to pour fluid 272 into the foundation 201. Electrical/data devices enclosure 235 and leader bore to facilitate engaging, plumbing and securing the pole 222 assembly employing the I-cap 2100 to the foundation 201.

Fig. 20C shows a plan view of the pole assembly employing two luminaires 277 resting in a pre-fabricated foundation 201 with multi-part I-cap enclosure 279 engaging the pole inside the foundation's pole cavity 209.

Fig. 20D shows the assembly of Fig. 20C in elevation with the multi-part I-cap enclosure 279 engaging the pole 222 and the foundation 201 and providing moisture protection to the pole cavity 209. Also shown is an inlet spout 280 to pour fluid 272 into the foundation 201 electrical/data devices enclosure 235 and leader bore to facilitate engaging and securing the pole 222 assembly and the I-cap 2100 to the foundation 201.

Fig. 20E shows an enlarged and exploded perspective of top of foundation 293. Also shown are the compressive filler/elastomeric compound 237 (for this illustration purpose higher than its true location at recess 288 below), the pole 222, the top of the monolithic I-cap 278 and pole anti-rotation/uplift bolt 248. The monolithic I-cap enclosure 2100 slides down the pole 222 shaft and engages the pole 222 by at least one bolt 248. The bolt 248 is inserted through the pole cavity 209 wall and the monolithic I-cap enclosure 2100. Once the I-cap enclosure 2100 is secured in place, the compressive filler/elastomeric compound 237 is placed in the I-cap recess 288 to protect the pole cavity 209 against moisture entry.

Fig. 20F shows an enlarged exploded perspective of top of foundation 293. Also shown are the compressive filler/elastomeric compound 237, the pole 222, the two-part I-cap enclosure top 279, the pole anti-rotation/uplift bolt 248, and the top of foundation 293. The two-part I-cap enclosure 2100 is inserted into the pole cavity 209 embracing the pole at their inner walls and the pole cavity 209 with their outer walls. Then, I-bolts 248 are inserted through the pole cavity 209 wall and through the I-cap enclosure 2100, securing the pole 222. Then, compressive filler/elastomeric compound 237 is placed in the I-cap recess 288 to protect the pole cavity 209 against moisture entry. Bolt 248 can be engaged a threaded bore in the pole cavity 209 wall, in the I-cap 2100 or both.

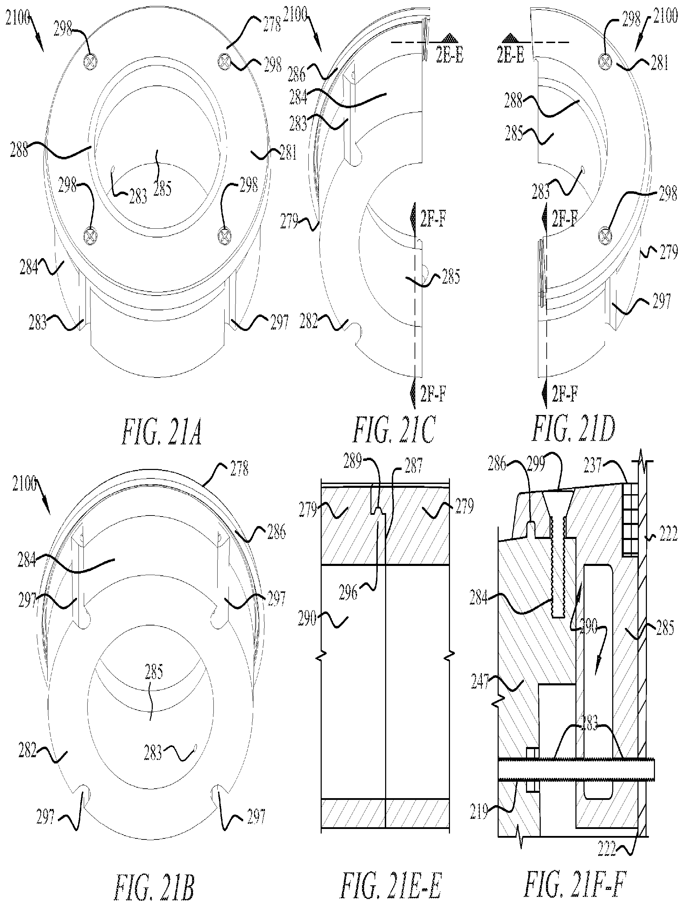

Figs. 21A and 21B show top and bottom perspectives of the I-cap enclosure 279 monolithic embodiment. Fig. 21A shows the I-cap recess 288, the inner wall 285, the top 281, the outer wall 284, and a through bore 283, top bore 298 and I-Cap keyed lock 297. Fig. 21B shows the cap's lip 286, the outer wall 284, the inner wall 285, a through bore 283, the cap's bottom face 282 and the I-Cap lock 297. The I-cap enclosure slides down along the pole 222 shaft and is wedged between the pole 222 and the pole cavity 209 at the top of the pole cavity 211. The I-Cap's top bolt/s mounted from above, secure the enclosure to the foundation 201. Bolt/s 248 through bolt port 292 in the pole cavity exterior wall 209 secure the pole 222 and the I-Cap 2100 to the foundation 201.

Figs. 21C and 21D show bottom and top perspectives of half of a multi-part I-cap enclosure 279. In this embodiment the two parts are joined together after the pole 222 shaft rests on the pole cavity 209 tapered structure 221. The multi-part I-cap 279 is inserted at the top of the pole cavity 211 having an overlapping lip 286 sloped to direct moisture away from the pole 222 toward the exterior edge of the pole cavity top 211. Fig. 21C shows the cap's lip 286, the outer wall 284, a through bore 283, and the inner wall 285. Fig. 21D shows the top of the I-cap 281 recess 288 into which compressive filler/elastomeric compound 237 is placed, a through bore 283, and the cap's inner wall 285. Also shown are bores 298 and the I-Cap keyed lock 297.

Fig. 21E-E shows a partial section of the multi-part I-cap 279 enclosure interlock at the seam 287 and the cap's top lip 289 is keyed into the cap's bottom lip 296. The multi-part I-cap enclosure 279 cross-section may include voids 290 reducing its weight and material without compromising its ability to transfer the pole's 222 lateral loads to the foundation 201. The voids may be enclosed by radial spokes originating at the multi-part I-cap's enclosure's 279 inner wall 285 terminating at the outer wall 284.

Fig. 21F-F shows a partial transverse section at the top of the pole cavity 211 centered between the pole 222 and the pole cavity wall 247. Wedged between them is the I-cap enclosure 2100 having an overhang over the top of the pole cavity wall 247 lip 286. The top of the I-cap 281 is sloped outwardly and down from the face of the pole 222 and compressive filler/elastomeric compound 237 occupies a recess 288 in the I-cap enclosure's 2100 top inner wall 285. Bolt 248 inserted at the top of the I-Cap enclosure 2100 secures the I-Cap to the foundation. The foundation's top lip 289 may compress a gasket wedged below the bottom overhung lip of the I-Cap 2100. Also shown is bolt 248 extending from the pole cavity wall 247 through the I-cap enclosure 2100, into the pole's 222 wall. This embodiment shows the I-cap enclosure through bore 246 threaded. In other embodiments the I-cap enclosure 2100 bore can be smooth faced.

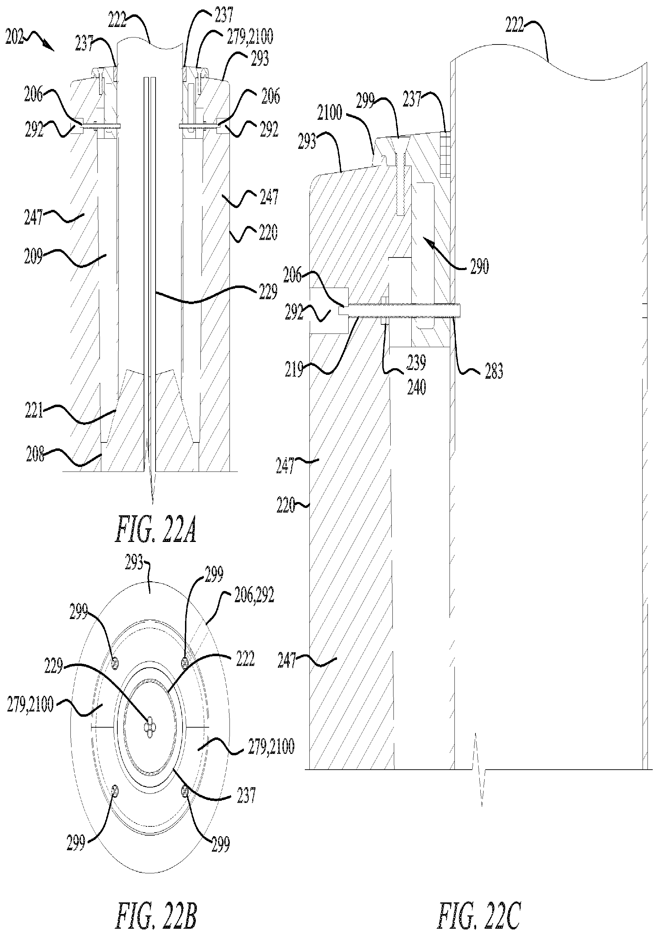

Fig. 22a shows a section through the pole cavity 209. At the vertical center of the cavity resting on a tapered structure 221 is a pole 222 with conduits 229 running at its center. Below and away from the tapered structure 221 a through opening 208 evacuates any trapped moisture inside the pole cavity 209. At the top of the pole cavity, wedged between the pole cavity wall 247 and the pole 222 is the I-cap enclosure 2100. The enclosure caps the top of the foundation 293 preventing moisture travel into the pole cavity 209. The enclosure also secures the pole to the foundation 201 employing bolts 248. The bolts are inserted and torqued inside the exterior of the foundation wall through bolt ports 292. Following installation, the ports can be filled and capped.

Fig. 22B shows a plan view of section 22A (above) employing multi-part I-cap enclosure 279. Also shown are I-cap top bolts 299, conduits 229, the pole 222, the top of foundation 293, compressive filler/elastomeric compound 237, and in dash line below a through bolt port 292.

Fig. 22C shows a partial enlargement of the top of the pole cavity wall 247 with the I-cap enclosure 2100 wedged between the pole cavity wall 247 and the pole 222. This partial enlargement shows a recess 239 in the inner wall of the pole cavity 209 and a threaded insert plate 240 through which the bolt 248 is threaded. This fastening method is one example of several methods to secure the pole. Other methods may include a threaded I-cap enclosure and/or pre-fabricated threads inside the pole cavity wall 247. Also shown is an I-cap top bolt 299 fastened into the foundation lock bore 2102, securing the I-cap 2100 to the foundation 201.

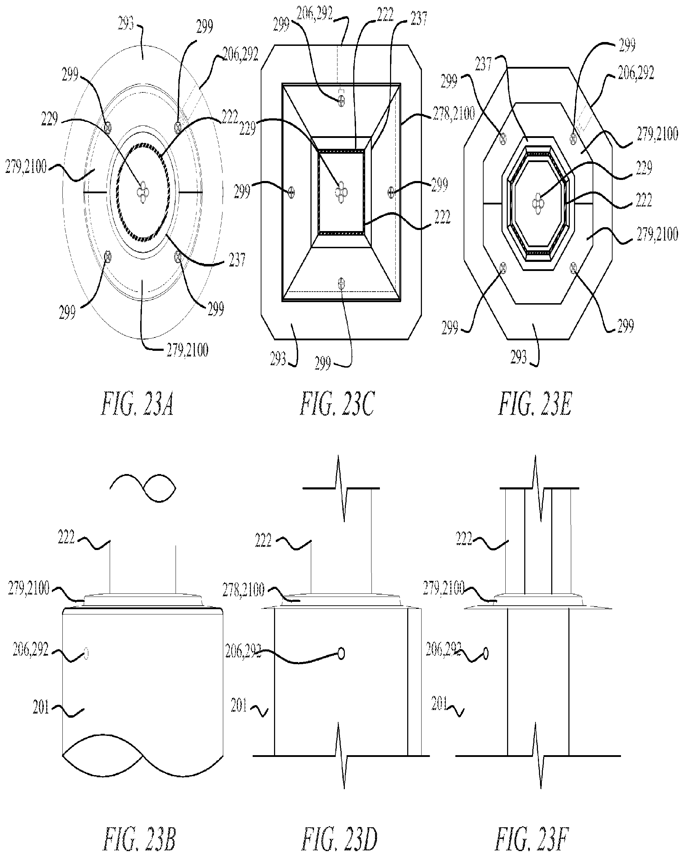

Figs. 23A and 23B show the multi-part I-cap enclosure 279 in plan and elevation views inside a round pre-fabricated pole foundation 201. Fig. 23A shows the top of the foundation 293, the pole 222, conduits 229, compressive filler/elastomeric compound 237, multi-part I-cap enclosure 279 and through bolt ports 292. Fig. 23B shows the pole 222 inside multi-part I-cap enclosure 279 on a round pre-fabricated foundation 201 with a through bolt port 292. The I-cap 2100 in this embodiment is secured to the foundation 201 employing four I-cap top bolts 299.

Figs. 23C and 23D show a monolithic I-cap enclosure 278 in plan and elevation views inside a squared pre-fabricated pole foundation 201. Fig. 23C shows the top of the foundation 293, the pole 222, conduits 229, compressive filler/elastomeric compound 237, monolithic I-cap enclosure 278, and through bolt ports 292. Fig. 23D shows the pole 222 inside the monolithic I-cap enclosure 288 on a square pre-fabricated foundation 201 with a through bolt port 292. The I-cap 2100 in this embodiment is secured to the foundation 201 employing four I-cap top bolts 299.

Figs. 23E and 23F show the multi-part I-cap enclosure 279 in plan and elevation views inside an octagonal pre-fabricated pole foundation 201. Fig. 23E shows the top of the foundation 293, the pole 222, conduits 229, compressive filler/elastomeric compound 237, multi-part I-cap enclosure 279 and through bolt ports 292. Fig. 23F shows the pole 222 inside multi-part I-cap enclosure 279 on an octagonal pre-fabricated foundation 201 with a through bolt port 292. The I-cap 2100 in this embodiment is secured to the foundation 201 employing four I-cap top bolts 299.

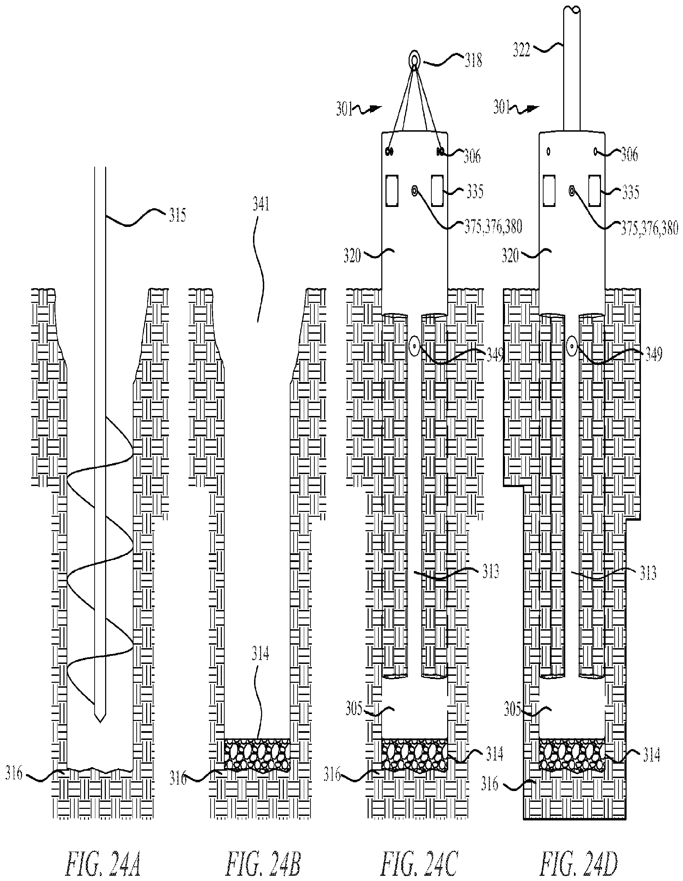

### Embodiment Described in Figs. 24A-27C

### Pole Foundation Erection Process

The conventional "pour-in-place" pole foundation construction and pole erection process entails the following steps:
1. Ordering materials such as steel rebar, gravel, plywood, and forms;
2. Scheduling onsite drop ship dates for the above materials;
3. Ordering luminaires and poles, often requiring that anchor bolts pre-ship prior to balance of order arrival;
4. Constructing the steel cage for the concrete foundation structural reinforcement;
5. Constructing plywood templates for the anchor bolts and secure the bolts with the template to cage;
6. Scheduling a date for concrete pour;
7. Augering foundation bores and, where needed, providing bedding material for the foundation (weather permitting);
8. Lowering forms with rebar cage into bores, plum and secure them, or dropping the steel rebar cages into forms after the forms were plumbed and secured in bores. The steel rebar cages could be inserted inside the form or following;
9. Making all pre-pour electrical connectivity prep work;
10. Backfilling and compacting soil around the forms if needed;
11. Scheduling a crane for pole standing;
12. Pouring concrete, vibrating inside the forms and waiting until concrete cures (weather permitting);
13. Assembling pole and luminaire(s) and/or other devices;
14. Using a crane, lower pole assembly on pole base securing pole to foundation with anchor bolts nuts;
15. Adjusting anchor bolts' nuts to plumb the pole;
16. Removing above grade forms and refinishing the foundation surfaces;
17. Pulling all electrical wire and securing the hand hole cover to pole;
18. Placing pole base cover or architectural nut covers on pole base plate;
19. Refinishing/touching up any scratches, and removing dirt from pole and foundation base; and
20. Powering up pole-mounted devices and verifying proper operation.

The present innovation of pole foundation construction and pole erection process is rapid requiring fewer steps:
1. Ordering foundation, foundation components, pole and luminaires;
2. Augering bores in the soil and bedding the bores' bottom if needed;
3. Lowering pre-casted foundation into the bores;
4. Pulling below grade power into the foundation;
5. Backfilling and compacting soil around the foundation;
6. Lowering a pole with luminaires, absent a base plate, into the foundation pole cavity;
7. Securing the pole assembly using bolts inserted from the foundation wall;
8. Sealing gap between pole and foundation with elastomeric compound;
9. Touching up any scratches and removing dirt from pole and foundation base; and
10. Trimming all electrical connections, powering up and verifying that all luminaires and/or other devices operate properly.

Coupled with the art described in the parent patent and continuation 01, this innovative foundation construction and pole erection reduce 10 steps from the conventional foundation construction and pole erection.

The pre-fabricated foundation employs state of the art manufacturing technologies reducing on-site manual labor. This reduction lowers the overall production costs and the likelihood of bad weather having an adverse impact on the construction schedule. The innovation enhances its parent patent and continuation 01, by streamlining creating an all-in-one foundation streamlining the entire foundation and pole erection process.

### About the Foundation

The foundation can be manufactured just-in-time having information at hand about the pole shaft dimensions specified. Today's fabrication technology is capable of producing complex forms in real time. For example, 3D components are printed in-real-time at the space station by an uplink from Earth. The pole rests on either a flat or tapered structure at the bottom of the pole cavity with a through opening to enable moisture to evacuate the cavity. The pole is secured to the foundation using at least one through bolts. The bolt is inserted through the pole cavity wall and can penetrate the exterior wall of the pole. A recess at the aperture opening of the pole cavity enables sealing the gap between the pole cavity and pole from moisture penetration. The sealer can be a compressive filler and/or an elastomeric compound.

The all-in-one foundation:
1. Transfers the pole's lateral loads to the foundation's walls
2. Is the pole's anti-rotation lock
3. Is the pole's anti-uplift lock
4. Can facilitate pole alignment
5. Prevents moisture from entering the foundation's pole cavity

The present innovation can employ two of the parent patent key elements: a tapered structure at the pole cavity's bottom center, and a pole alignment/anti-rotation/anti-uplift device at the upper portion of the pole cavity's walls.

The foundation is fabricated from substantially non-corrosive hardened material, resistant to the elements including minerals such as salt and common urban/industrial pollutants. The device manufacturing methods include but are not limited to 3D printing and injection molding. Employing 3D printing employing polymer molten resin are similar material, innovate the foundation fabrication process adding design flexibility while reducing production time. For example, the foundation pole cavity opening complements any form the pole's profile may have. Also, the foundation's exterior walls form can be fabricated to complement the pole's cross-sectional profile. Structural calculations can also be executed in real-time by employing design software with predictable material properties stored. The foundation can be fabricated from a single monolithic embodiment, or made of several embodiments joined together by mechanical means.

The foundation possesses the following common properties, regardless of its form:
1. It has at least one through bore in its body enabling bolt/s to engage the pole. The bore may be threaded or non-threaded.
2. Its pole cavity's inner circumference, in part or in whole, abuts the outer face of the pole.
3. Its outer top face is sloped away from the pole exterior face.
4. has a recess at the pole cavity's aperture opening for placement of sealing material between the exterior face of the pole and the foundation preventing moisture travel to the pole cavity.

### Other Foundation Features

The foundation can employ cellular structure and contain volumetric enclosure/s. Both structures and particularly the cellular structure can be easily fabricated today by means of 3D printing. As a result, the foundation to site weight is reduced and the foundations are easier to handle posing lesser risk to injury. Following foundation embedment, if additional weight is needed, through an inlet spout at the exterior face of the foundations' pole cavity wall fluid can enter the cells the foundation's cells and/or the volumetric enclosure.

Figs. 24A-D show the pre-fabricated pole foundation placement process inside an augered bore in the soil. In Fig. 24A the bore is augered. In Fig. 24B the bottom of the bore is bedded. In Fig. 24C the pre-fabricated foundation employing external I looped bolts engaged threaded lift bores 347 located at the exterior wall of the pole cavity 320. The I loop/s facilitate lifting the foundation/s from the truck and lowering them inside the augered bore 341. The same I loop bores can be used to plumb the foundation (not shown). Since the pole 322 is fully aligned inside with the foundation's pole cavity 309, there is no need to align the pole. The alignment is required is for the foundation. Fig. 24D shows fill material 317 around the foundation. The fill is poured and compacted following pulling power/data conductors into the foundation structure. The pole 322 then simply lowered into the pole cavity 309 and is secured to the foundation 1 by at least one pole bolt 325. Other elements shown: the outlet or inlet spout 376, 380 and a valve 375.

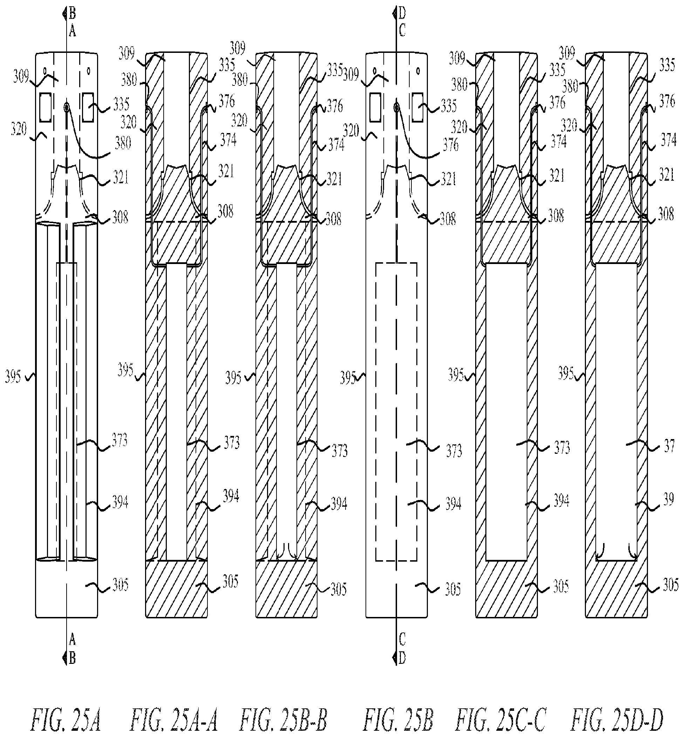

Fig. 25A shows an elevation of a pre-fabricated pole foundation employing a cruciform core section 304. At the vertical center of the core section 304, a volumetric enclosure 373 reduce the shipping weight of the foundation 301 and eases the foundation handling also reducing injury risk. On-site, the volumetric enclosure 373 can be filled with fluid 372 when additional foundation weight is needed. Fluid 372 enters the foundation cellular structure 370 and/or the volumetric enclosure 373 through an inlet spout 380 located at the foundation's exterior wall 368. The spout may also act as an outlet spout 376 and a breather valve 375. Also shown are the foundation's exterior walls 395 including the pole cavity wall 320, top of foundation's base section 394, base section 305 and electrical/data enclosure 335.

Fig. 25A-A is a vertical section through the center of the foundation 301 for the foundation embodiment shown in Fig. 25A. At the core section 305, a volumetric enclosure 373 may contain fluid 372. The fluid reaches the volumetric enclosure 373 through a pipe 374 embedder or integral to the pole cavity wall. The pipe 374 originates next to the inlet spout 380 located at the exterior wall of the pole cavity 320. In different embodiments, the fluid 372 can perforate through the cellular structure 370 inside the foundation's walls or both the cellular structure 370 and the volumetric enclosure 373.

Pole 322 is shown slide down the walls (?) of the pole cavity 320 and rests on a tapered structure 321 at the bottom of the pole cavity 309 with through opening 308 facilitating a mean for moisture to evacuate the cavity. In another embodiment, the pole rests on a flat surface whereas the through openings 308 are depressed. At the top of the cavity, a recess at the aperture of the pole cavity wall 239 retains compressive filler/elastomeric compound 237 to prevent moisture entering the pole cavity 309. The pole 222 is secured to the foundation by engaging pole bolt/s through bolt port/s 292 at the foundation's exterior wall 295. Fig. 25B-B is like Fig. 25A-A except perforated openings inside the volumetric enclosure 373 permit fluid 372 travel into the foundation's walls cellular structure 370 and/or to the foundation's base section 305.

Fig. 25B shows an elevation of a pre-fabricated pole foundation employing a round core section 304. At the vertical center of the core section 304, a volumetric enclosure 373 reduce the shipping weight of the foundation 301 and eases the foundation handling also reducing injury risk. On-site, the volumetric enclosure 373 can be filled with fluid 372 when additional foundation weight is needed. Fluid 372 enters the foundation cellular structure 370 and/or the volumetric enclosure 373 through an inlet spout 380 located at the foundation's exterior wall 368. The spout may also act as an outlet spout 376 and a breather valve 375. Also shown are the foundation's exterior walls 395 including the pole cavity wall 320, top of foundation's base section 394, base section 305 and electrical/data enclosure 335.

Fig. 25C-C is a vertical section through the center of the foundation 301 for the foundation embodiment shown in Fig. 25B. At the core section 305, a volumetric enclosure 373 may contain fluid 372. The fluid reaches the volumetric enclosure 373 through a pipe 374 embedder or integral to the pole cavity wall. The pipe 374 originates next to the inlet spout 380 located at the exterior wall of the pole cavity 320. In different embodiments, the fluid 372 can perforate through the cellular structure 370 inside the foundation's walls or both the cellular structure 370 and the volumetric enclosure 373.

Pole 322 is shown slide down the walls of the pole cavity 320 and rests on a tapered structure 321 at the bottom of the pole cavity 309 with through opening 308 facilitating a mean for moisture to evacuate the cavity. In another embodiment, the pole rests on a flat surface whereas the through openings 308 are depressed. At the top of the cavity, a recess at the aperture of the pole cavity wall 339 retains compressive filler/elastomeric compound 337 to prevent moisture entering the pole cavity 309. The pole 322 is secured to the foundation by engaging pole bolt/s through bolt port/s 392 at the foundation's exterior wall 395. Fig. 25D-D is like Fig. 25C-C except perforated openings inside the volumetric enclosure 373 permit fluid 372 travel into the foundation's walls cellular structure 370 and/or to the foundation's base section 305.

Figs. 26A, 26B-B and 26C show enlargements of the volumetric enclosure 373 and the cellular structure 370 inside the foundation walls. Fig. 26A shows the foundation elevation with horizontal section designators. Fig. 26A-A shows a partial horizontal section at the pole cavity 309. Elements enumerated include: the inlet spout 380, fluid pipe 374, cellular-structure 370, exterior wall of pole cavity 320, foundation pole, power/data conduit 329, through opening 308, tapered structure 321, and device enclosure 335. Fig 26B-B shows a partial horizontal section at the bottom of the round core foundation above the foundation's base section 305. Elements enumerated include: cellular structure 370, top of foundation base 394, volumetric enclosure 373, cellular wall 369 and foundation exterior wall 395. Fig. 26C shows the horizontal enlarged section of the pole cavity 309 at the electrical/data enclosure 335 elevation depicting the inlet spout 380 opening and the fluid pipe 374 riser inside the cellular structure 370 wall to enable fluid 372 to travel to the volumetric enclosure 373 and/or perforate throughout the cellular walls of foundation including the base section 305.

Fig. 26A shows a section of the foundation's pole cavity 309 containing a pole 322 with power conduits 329 rise from the bottom center of the pole. Also located at the bottom of the cavity are through openings 308 which facilitate evacuation of trapped moisture at the cavity's bottom. In this embodiment the pole 322 is resting on a tapered structure 321. In another embodiment the pole rests on a flat surface with the through openings 308 are depressed. Bolt/s 325 lodged through the exterior wall of the pole cavity 320 secure the pole 322 from up-lift and rotation forces. The bolt/s 325 also can be used for pole plumbing when the clearance between the pole 322 and the pole cavity 309 is wide. This use can be when the foundation is adapted to retain a smaller diameter pole 322. Generally, the gap between the pole cavity 309 and the pole 322 is minimal and the pole 322 and the foundation 301 assembly plumbing is accomplished by precisely plumbing the foundation 301. The bolt/s 325 can engaged threads in the pole cavity wall or by a pole cavity inserted or embedded threaded plate 340. The same threaded bolt bores can retain an I loop lift bolts 347 to lift the foundation/s 301 off a truck and lower them into an augured bore in the soil. After securing the pole 322, the through bolt port 392 at the exterior wall of the pole cavity 320 can be plugged with a cap or capped with a sustainable non-shrink compound. At the top of the pole cavity 309 a recess at the pole aperture 396 opening retains compressive filler/elastomeric compound 337 sealing the gap between the pole 320 and the walls of the pole cavity 309 from moisture travel into the pole cavity.

Fig. 26B shows a plan view of the above fig. 26A section. The elements shown are: through opening 308. Pole 322, compressive filler/elastomeric compound 320, tapered structure 321, conduit 329, top of pole cavity 311, pole cavity aperture recess 396, through bolt port 392, in dashed line at bottom of pole cavity through opening 308 and pole bolt 325.

Fig. 26C shows an enlarged partial section of the pole cavity aperture 396 having a recess 339 at the top of the pole aperture filled with compressive filler/elastomeric compound 337. The pole 322 is secured to the foundation by the pole bolt 325 inserted through the exterior wall of pole cavity 320 pole port 392. In this embodiment treaded (?) bores extend the width of the pole cavity wall. A continuous radial sloped surface removes moisture away from the top of the pole cavity 311.

## Claims

1. An assembly comprising a pre-fabricated pole foundation (1; 101; 201; 301) to be used for a pole without a base plate, the pre-fabricated pole foundation (1; 101; 201; 301) being formed of one of a cellular structure (170; 270; 370), a volumetric enclosure (173; 273; 373) or a combination of a cellular structure (170; 270; 370) and a volumetric enclosure (173; 273; 373); and wherein the pre-fabricated pole foundation (1; 101; 201; 301) is formed by 3D printing and comprises:
a pole cavity section (2) located at a top of the pre-fabricated pole foundation, a bridge section (3) located directly below the pole cavity section (2), a core section (4) located directly below the pole cavity section (2) and a base section (5) located at a bottom of the pre-fabricated pole foundation, wherein
the pole cavity section (2) comprises a cavity wall (20) defining a pole cavity (9; 109; 209; 309) forming a minimal clearance between the cavity wall (20) and a face of a wall of a pole (22; 122; 222; 322) to be received in the pole cavity (9; 109; 209; 309); and
the assembly further comprising a securing device, wherein a pole (22; 122; 222; 322) is configured to be secured within the pole cavity (9; 109; 209; 309) of the pre-fabricated pole foundation (1; 101; 201; 301) by use of the securing device, **characterized in that** the pre-fabricated pole foundation (1; 101; 201; 301) employs polymer molten resin employed by 3D printing.

2. The assembly of claim 1, wherein the securing device is a bolt, the bolt being configured to be inserted through an exterior of a wall of the pre-fabricated pole foundation (1; 101; 201; 301) to secure the pole (22; 122; 222; 322) to the pre-fabricated pole foundation (1; 101; 201; 301), and/or for engaging a lifting apparatus to lift the pre-fabricated pole foundation (1; 101; 201; 301).

3. The assembly of claim 1, wherein the pole (22; 122; 222; 322) is configured to rest on a tapered or flat structure (21; 121; 221; 321) within the pole cavity (9; 109; 209; 309).

4. The assembly of claim 1, wherein the cellular structure (170; 270; 370), the volumetric enclosure (173; 273; 373) or the combination of cellular structure (170; 270; 370) and volumetric enclosure (173; 273; 373) in the foundation (1; 101; 201; 301) can retain fluid.

5. The assembly of claim 1, wherein a pre-fabricated opening is arranged in an exterior wall of the pre-fabricated pole foundation (1; 101; 201; 301) to retain at least one power, data or power and data enclosures.

6. The assembly of claim 1, wherein the entire pre-fabricated pole foundation (1; 101; 201; 301) is fabricated of non-corrosive materials inert to minerals and pollutants; or wherein the entire pre-fabricated pole foundation (1; 101; 201; 301) and pole assembly are fabricated of non-corrosive material inert to minerals and pollutants.

7. The assembly of claim 1, wherein the pre-fabricated pole foundation (1; 101; 201; 301) is configured to be assembled by employing a plurality of keyed components joined mechanically on-site.

8. The assembly of claim 1, wherein a recess at an aperture opening of the pole cavity (9; 109; 209; 309) retains sealing material to prevent moisture travel into the pole cavity (9; 109; 209; 309).

9. The assembly of claim 1, further comprising at least one pole-anti-rotation/anti-uplift device extending from a wall of the pole cavity (9; 109; 209; 309) towards the pole's vertical center; and wherein the cellular structure (170; 270; 370) and/volumetric enclosure (173; 273; 373) comprises voids.

10. The assembly of claim 9, wherein the pole foundation cavity wall retains at least one inlet spout (180; 280; 380) configured to enter fluid, gas or solids into the foundation structure interior, and at least one outlet spout (376) configured to exit fluid, gas or solids from the foundation structure interior.

11. The assembly of claim 9, wherein at least one cavity inside the foundation structure is configured to retain fluid or solids to act as foundation ballast; and wherein said fluid may change state in coming in contact with air and/or an admixture.

12. The assembly of claim 9, wherein the pole anti-rotation/anti-uplift device can also serve as a pole alignment device; and/or wherein the pole anti-rotation/anti-uplift device is engaged in a threaded through bore in a wall of the foundation (1; 101; 201; 301).

13. A method of erecting a pole, the method comprising the acts of:
providing, by 3D-printing, a pre-fabricated pole foundation (1; 101; 201; 301);
providing an assembly according to claim 1 comprising the 3D-printed pre-fabricated pole foundation;
arranging a bolt bore in an exterior wall of the pre-fabricated pole foundation (1; 101; 201; 301);
installing the pre-fabricated pole foundation (1; 101; 201; 301) within a ground surface;
embedding a pole (22; 122; 222; 322) within the pole cavity (9; 109; 209; 309) of the pre-fabricated pole foundation (1; 101; 201; 301), whereby the pole cavity (9; 109; 209; 309) provides automatic axial alignment of the pole in view of the pole cavity;
sealing a gap which is formed between the pole (22; 122; 222; 322) and the pole cavity wall (20; 247; 320; 339) with a compressive filler and/or elastomeric compound and/or a cap;
and
securing the pole (22; 122; 222; 322) within the pole cavity (9; 109; 209; 309) to prevent rotation and resist uplift forces, wherein securing the pole (22; 122; 222; 322) includes arranging at least one through bolt through said bolt bore to engage the pole (22; 122; 222; 322).

## Patentansprüche

1. Zusammenbau, umfassend ein vorgefertigtes Stützenfundament (1; 101; 201; 301) zur Verwendung für eine Stütze ohne eine Grundplatte, wobei das vorgefertigte Stützenfundament (1; 101; 201; 301) aus einem von einer zellulären Struktur (170; 270; 370), einer volumetrischen Umhäusung (173; 273; 373) oder einer Kombination aus einer zellulären Struktur (170; 270; 370) und einer volumetrischen Umhäusung (173; 273; 373) gebildet ist, und wobei das vorgefertigte Stützenfundament (1; 101; 201; 301) durch 3D-Druck gebildet ist und Folgendes umfasst:
einen Stützenhohlraumabschnitt (2), der sich oben an dem vorgefertigten Stützenfundament befindet, einen Brückenabschnitt (3), der sich direkt unter dem Stützenhohlraumabschnitt (2) befindet, einen Kernabschnitt (4), der sich direkt unter dem Stützenhohlraumabschnitt (2) befindet, und einen Basisabschnitt (5), der sich an einer Unterseite des vorgefertigten Stützenfundaments befindet, wobei
der Stützenhohlraumabschnitt (2) eine Hohlraumwand (20) umfasst, welche einen Stützenhohlraum (9; 109; 209; 309) definiert, der einen minimalen Abstand zwischen der Hohlraumwand (20) und einer Fläche einer Wand einer Stütze (22; 122; 222; 322) bildet, um in dem Stützenhohlraum (9; 109; 209; 309) aufgenommen zu werden; und
wobei der Zusammenbau ferner eine Befestigungsvorrichtung umfasst, wobei eine Stütze (22; 122; 222; 322) konfiguriert ist, um innerhalb des Stützenhohlraums (9; 109; 209; 309) des vorgefertigten Stützenfundaments (1; 101; 201; 301) durch Verwendung der Befestigungsvorrichtung befestigt zu werden, **dadurch gekennzeichnet, dass** das vorgefertigte Stützenfundament (1; 101; 201; 301) geschmolzenes Polymerharz, bereitgestellt durch 3D-Druck, verwendet.

2. Zusammenbau nach Anspruch 1, wobei es sich bei der Befestigungsvorrichtung um einen Bolzen handelt, wobei der Bolzen konfiguriert ist, um durch ein Äußeres einer Wand des vorgefertigten Stützenfundaments (1; 101; 201; 301) eingesetzt zu werden, um die Stütze (22; 122; 222; 322) an dem vorgefertigten Stützenfundament (1; 101; 201; 301) zu befestigen, und/oder zum Eingreifen in eine Hebevorrichtung zum Heben des vorgefertigten Stützenfundaments (1; 101; 201; 301).

3. Zusammenbau nach Anspruch 1, wobei die Stütze (22; 122; 222; 322) konfiguriert ist, um auf einer sich verjüngenden oder flachen Struktur (21; 121; 221; 321) innerhalb des Stützenhohlraums (9; 109; 209; 309) zu ruhen.

4. Zusammenbau nach Anspruch 1, wobei die zelluläre Struktur (170; 270; 370), die volumetrische Umhäusung (173; 273; 373) oder die Kombination aus zellulärer Struktur (170; 270; 370) und volumetrischer Umhäusung (173; 273; 373) in dem Fundament (1; 101; 201; 301) Fluid halten kann.

5. Zusammenbau nach Anspruch 1, wobei eine vorgefertigte Öffnung in einer Außenwand des vorgefertigten Stützenfundaments (1; 101; 201; 301) angeordnet ist, um mindestens eine Stromumhäusung, eine Datenumhäusung oder Strom- und Datenumhäusungen zu halten.

6. Zusammenbau nach Anspruch 1, wobei das gesamte vorgefertigte Stützenfundament (1; 101; 201; 301) aus korrosionsbeständigem Material hergestellt ist, das gegenüber Mineralien und Verschmutzungen inert ist, oder wobei das gesamte vorgefertigte Stützenfundament (1; 101; 201; 301) und der Stützenzusammenbau aus korrosionsbeständigem Material hergestellt sind, das gegenüber Mineralien und Verschmutzungen inert ist.

7. Zusammenbau nach Anspruch 1, wobei das vorgefertigte Stützenfundament (1; 101; 201; 301) konfiguriert ist, um durch Verwendung einer Vielzahl von formschlüssigen Komponenten zusammengebaut zu werden, die mechanisch vor Ort verbunden werden.

8. Zusammenbau nach Anspruch 1, wobei eine Aussparung an einer Öffnung des Stützenhohlraums (9; 109; 209; 309) Dichtungsmaterial hält, um das Eindringen von Feuchtigkeit in den Stützenhohlraum (9; 109; 209; 309) zu verhindern.

9. Zusammenbau nach Anspruch 1, ferner umfassend mindestens eine Stützen-Antirotations-/Antihebungsvorrichtung, die sich von einer Wand des Stützenhohlraums (9; 109; 209; 309) zur vertikalen Mitte der Stütze erstreckt, und wobei die zelluläre Struktur (170; 270; 370) und/oder volumetrische Umhäusung (173; 273; 373) Hohlräume umfasst.

10. Zusammenbau nach Anspruch 9, wobei die Stützenfundamenthohlraumwand mindestens einen Einlassstutzen (180; 280; 380) hält, der konfiguriert ist, damit Fluid, Gas oder Feststoffe in das Innere der Fundamentstruktur gelangen, und mindestens einen Auslassstutzen (376), der konfiguriert ist, damit Fluid, Gas oder Feststoffe aus dem Inneren der Fundamentstruktur heraus gelangen.

11. Zusammenbau nach Anspruch 9, wobei mindestens ein Hohlraum im Inneren der Fundamentstruktur konfiguriert ist, um Fluid oder Feststoffe zu halten, die als Fundamentballast fungieren; und wobei das Fluid seinen Zustand ändert, wenn es in Kontakt mit Luft und/oder einer Beimischung gelangt.

12. Zusammenbau nach Anspruch 9, wobei die Stützen-Antirotations-/Antihebungsvorrichtung auch als Stützenausrichtungsvorrichtung dienen kann; und/oder wobei die Stützen-Antirotations-/Antihebungsvorrichtung in einer Durchgangsbohrung mit Gewinde in einer Wand des Fundaments (1; 101; 201; 301) in Eingriff gebracht ist.

13. Verfahren zum Errichten einer Stütze, wobei das Verfahren die folgenden Vorgänge umfasst:
Bereitstellen, durch 3D-Drucken, eines vorgefertigten Stützenfundaments (1; 101; 201; 301);
Bereitstellen eines Zusammenbaus nach Anspruch 1, umfassend das 3D-gedruckte vorgefertigte Stützenfundament;
Anordnen einer Bolzenbohrung in einer Außenwand des vorgefertigten Stützenfundaments (1; 101; 201; 301);
Installieren des vorgefertigten Stützenfundaments (1; 101; 201; 301) innerhalb einer Bodenfläche;
Betten einer Stütze (22; 122; 222; 322) im Inneren des Stützenhohlraums (9; 109; 209; 309) des vorgefertigten Stützenfundaments (1; 101; 201; 301), wobei der Stützenhohlraum (9; 109; 209; 309) eine automatische axiale Ausrichtung der Stütze mit dem Stützenhohlraum bereitstellt;
Abdichten eines Spalts, der zwischen der Stütze (22; 122; 222; 322) und der Stützenhohlraumwand (20; 247; 320; 339) gebildet ist, mit einer komprimierbaren Füller-/Elastomerverbindung und/oder einer Kappe;
und
Befestigen der Stütze (22; 122; 222; 322) im Inneren des Stützenhohlraums (9; 109; 209; 309), um Rotation zu verhindern und Hebekräften entgegen zu wirken, wobei das Befestigen der Stütze (22; 122; 222; 322) das Anordnen mindestens eines Durchgangsbolzens durch die Bolzenbohrung zum Eingriff in die Stütze (22; 122; 222; 322) beinhaltet.

## Revendications

1. Ensemble comprenant une fondation préfabriquée de poteau (1 ; 101 ; 201 ; 301) destinée à être utilisée pour un poteau sans plaque de base, la fondation préfabriquée de poteau (1 ; 101 ; 201 ; 301) étant formée d'une structure cellulaire (170 ; 270 ; 370), d'une enceinte volumétrique (173 ; 273 ; 373) ou d'une combinaison d'une structure cellulaire (170 ; 270 ; 370) et d'une enceinte volumétrique (173 ; 273 ; 373) ; et dans lequel la fondation préfabriquée de poteau (1 ; 101 ; 201 ; 301) est formée par impression 3D et comprend :
une section de cavité de poteau (2) située au sommet de la fondation préfabriquée de poteau, une section de pont (3) située directement sous la section de cavité de poteau (2), une section centrale (4) située directement sous la section de cavité de poteau (2) et une section de base (5) située au bas de la fondation préfabriquée de poteau,
dans lequel la section de cavité de poteau (2) comprend une paroi de cavité (20) définissant une cavité de poteau (9 ; 109 ; 209 ; 309) formant un espace libre minimal entre la paroi de cavité (20) et une face d'une paroi d'un poteau (22 ; 122 ; 222 ; 322) devant être reçu dans la cavité de poteau (9 ; 109 ; 209 ; 309) ; et
l'ensemble comprenant en outre un dispositif de fixation, dans lequel un poteau (22 ; 122 ; 222 ; 322) est configuré pour être fixé à l'intérieur de la cavité de poteau (9 ; 109 ; 209 ; 309) de la fondation préfabriquée de poteau (1 ; 101 ; 201 ; 301) à l'aide du dispositif de fixation, **caractérisé en ce que** la fondation préfabriquée de poteau (1 ; 101 ; 201 ; 301) utilise une résine polymère fondue utilisée par impression 3D.

2. Ensemble selon la revendication 1, dans lequel le dispositif de fixation est un boulon, le boulon étant configuré pour être inséré à travers une paroi extérieure de la fondation préfabriquée à poteaux (1 ; 101 ; 201 ; 301) afin de fixer le poteau (22 ; 122 ; 222 ; 322) à la fondation préfabriquée de poteau (1 ; 101 ; 201 ; 301), et/ou pour s'engager avec un dispositif de levage afin de soulever la fondation préfabriquée de poteau (1 ; 101 ; 201 ; 301).

3. Ensemble selon la revendication 1, dans lequel le poteau (22 ; 122 ; 222 ; 322) est configuré pour reposer sur une structure conique ou plate (21 ; 121 ; 221 ; 321) à l'intérieur de la cavité du poteau (9 ; 109 ; 209 ; 309).

4. Ensemble selon la revendication 1, dans lequel la structure cellulaire (170 ; 270 ; 370), l'enceinte volumétrique (173 ; 273 ; 373) ou la combinaison de la structure cellulaire (170 ; 270 ; 370) et de l'enceinte volumétrique (173 ; 273 ; 373) dans la fondation (1 ; 101 ; 201 ; 301) peut retenir un fluide.

5. Ensemble selon la revendication 1, dans lequel une ouverture préfabriquée est disposée dans une paroi extérieure de la fondation préfabriquée de poteau (1 ; 101 ; 201 ; 301) pour retenir au moins un boîtier d'alimentation, de données ou d'alimentation et de données.

6. Ensemble selon la revendication 1, dans lequel l'ensemble de la fondation préfabriquée de poteau (1 ; 101 ; 201 ; 301) est fabriqué à partir de matériaux non corrosifs inertes aux minéraux et aux polluants ; ou dans lequel l'ensemble de la fondation préfabriquée de poteau (1 ; 101 ; 201 ; 301) et l'ensemble de poteau sont fabriqués à partir d'un matériau non corrosif inerte aux minéraux et aux polluants.

7. Ensemble selon la revendication 1, dans lequel la fondation préfabriquée de poteau (1 ; 101 ; 201 ; 301) est configurée pour être assemblée en utilisant une pluralité de composants clavetés assemblés mécaniquement sur site.

8. Ensemble selon la revendication 1, dans lequel un évidement au niveau d'une ouverture de la cavité du poteau (9 ; 109 ; 209 ; 309) retient un matériau d'étanchéité pour empêcher l'humidité de pénétrer dans la cavité du poteau (9 ; 109 ; 209 ; 309).

9. Ensemble selon la revendication 1, comprenant en outre au moins un dispositif anti-rotation/anti-soulèvement du poteau s'étendant depuis une paroi de la cavité du poteau (9 ; 109 ; 209 ; 309) en direction du centre vertical du poteau ; et dans lequel la structure cellulaire (170 ; 270 ; 370) et/ou l'enceinte volumétrique (173 ; 273 ; 373) comprend des vides.

10. Ensemble selon la revendication 9, dans lequel la paroi de la cavité de fondation de poteau comporte au moins un bec d'entrée (180 ; 280 ; 380) configuré pour introduire un fluide, un gaz ou des solides à l'intérieur de la structure de fondation, et au moins un bec de sortie (376) configuré pour évacuer le fluide, le gaz ou les matières solides de l'intérieur de la structure de fondation.

11. Ensemble selon la revendication 9, dans lequel au moins une cavité à l'intérieur de la structure de fondation est configurée pour retenir un fluide ou des matières solides afin de servir de lest de fondation ; et dans lequel ledit fluide peut changer d'état au contact de l'air et/ou d'un mélange.

12. Ensemble selon la revendication 9, dans lequel le dispositif anti-rotation/anti-soulèvement du poteau peut également servir de dispositif d'alignement de poteau ; et/ou dans lequel le dispositif anti-rotation/anti-soulèvement de poteau est engagé dans un alésage fileté dans une paroi de la fondation (1 ; 101 ; 201 ; 301).

13. Procédé de montage d'un poteau, le procédé comprenant les étapes consistant à :
fournir, par impression 3D, une fondation préfabriquée de poteau (1 ; 101 ; 201 ; 301) ;
fournir un ensemble selon la revendication 1 comprenant la fondation préfabriquée de poteau imprimée en 3D ;
agencer un alésage de boulon dans une paroi extérieure de la fondation préfabriquée de poteau (1 ; 101 ; 201 ; 301) ;
installer la fondation préfabriquée de poteau (1 ; 101 ; 201 ; 301) dans une surface de sol ;
enfoncer un poteau (22 ; 122 ; 222 ; 322) dans la cavité de poteau (9 ; 109 ; 209 ; 309) de la fondation préfabriquée de poteau (1 ; 101 ; 201 ; 301), de sorte que la cavité de poteau (9 ; 109 ; 209 ; 309) assure l'alignement axial automatique du poteau par rapport à la cavité de poteau ;
sceller un espace qui est formé entre le poteau (22 ; 122 ; 222 ; 322) et la paroi de la cavité du poteau (20 ; 247 ; 320 ; 339) avec un matériau de remplissage compressible et/ou un composé élastomère et/ou un capuchon ;
et
fixer le poteau (22 ; 122 ; 222 ; 322) à l'intérieur de la cavité de poteau (9 ; 109 ; 209 ; 309) pour empêcher toute rotation et résister aux forces de soulèvement, dans lequel la fixation du poteau (22 ; 122 ; 222 ; 322) comprend l'agencement d'au moins un boulon traversant à travers ledit alésage de boulon pour venir en prise avec le poteau (22 ; 122 ; 222 ; 322).
